# EUROPEAN PATENT APPLICATION

(11) **EP 4 797 051 A1**
(43) Date of publication of application: **26.08.2026**
(21) Application number: 24889201.0
(22) Date of filing: 08.11.2024
(51) Int. Cl.: G06F 3/01, H04W 4/80, G06F 3/048, G06F 1/16, G06F 3/00, G06K 19/06, G06Q 50/10

(54) **VIRTUAL REALITY DEVICE AND METHOD FOR CONTROLLING OPERATION OF HOME APPLIANCE BY INSTALLING APPLICATION OF AT LEAST ONE HOME APPLIANCE, AND SYSTEM THEREFOR**

(30) Priority: 09.11.2023 KR 20230154687; 09.11.2023 KR 20230154688
(71) Applicant: LG Electronics Inc., Yeongdeungpo-gu Seoul 07336 (KR)
(72) Inventor: YOO, Hyunsun, Seoul 06772 (KR); KANG, Min Jeong, Seoul 06772 (KR); LIM, Sukhyun, Seoul 06772 (KR); KIM, Hyeran, Seoul 06772 (KR)
(74) Representative: Schott, Jakob Valentin
(86) International application number: PCT/KR2024/017703
(87) International publication number: WO 2025/101015

(57) **Abstract**

The present disclosure relates to a virtual reality device and a method for controlling operation of a home appliance by installing an application of at least one home appliance, and a system therefor. To this end, the virtual reality device according to the present disclosure may request and receive, from a portable terminal, a list of at least one home appliance registered in an application of the portable terminal, and request application information for the home appliance and install the application information in an application of the virtual reality device. Therefore, the virtual reality device according to the present disclosure can install the application of the home appliance in the application of the virtual reality device for a user's convenience.

## Description

### BACKGROUND

### [Technical Field]

. The present disclosure relates to a virtual reality device and method for controlling operation of a home appliance by installing an application for at least one home appliance, and a system therefor.

### [Description of the Related Art]

. Generally, a virtual reality device (e.g., a head mounted display (HDM)), as a display device worn on a head, projects a three-dimensional image using a parallax between two eyes through a small display disposed close to the two eyes when the virtual reality device is worn on the head.

. Such virtual reality devices are equipped with a gyroscope sensor that tracks a user's movement and a rendering function that creates an image based on the movement, such that a user may experience virtual reality (VR) or augmented reality (AR), and mixed reality (MR) that combines these, as if the user were in a three-dimensional space.

. Recently, technologies for controlling operations of home appliances within a home using such virtual reality devices are being studied.

. Patent Document (Korean Laid-Open Patent No. 10-2017-0108285) relates to an indoor device control system and method using augmented reality technology and discloses that a user controls an indoor device based on augmented reality technology, provides information tailored to user demand, and provides data on control information and status of the indoor device controlled by the user.

. However, Patent Document only discloses controlling an indoor device based on augmented reality technology and does not disclose controlling an indoor device requiring fire-control using a virtual reality device.

. In addition, conventionally, a virtual reality device provided with an application for controlling operations of home appliances has not been provided.

. In addition, conventionally, a screen of an application for controlling operations of a home appliance, which is displayed on a portable terminal, has not been reconfigured and displayed so as to correspond to a screen displayed on the virtual reality device.

. In addition, conventionally, the control of an indoor device based on augmented reality technology is merely disclosed, and an indoor device in which a field of view is not secured is not controlled through the virtual reality device.

.Accordingly, there is a need to conveniently control home appliances even while the user is using the virtual reality device by installing an application that controls operations of home appliances on the virtual reality device.

.In addition, there is a need for a virtual reality device configured to convert and display a screen of an application displayed on a portable terminal so as to correspond to the virtual reality device, and to remotely control a home appliance requiring fire-control.

### [SUMMARY OF THE DISCLOSURE]

.Accordingly, the present disclosure is directed to providing a virtual reality device and method for controlling operation of at least one home appliance.

.In addition, the present disclosure is directed to providing a virtual reality device and method for installing an application for at least one home appliance.

.In addition, the present disclosure is directed to providing a virtual reality device and method for receiving and installing an application for controlling operation of a home appliance through a portable terminal.

.In addition, the present disclosure is directed to providing a virtual reality device and method for registering a home appliance after acquiring an image of an unregistered home appliance through a camera.

.In addition, the present disclosure is directed to providing a system for conveniently controlling operation of a home appliance disposed at a distance while wearing a virtual reality device.

.In addition, the present disclosure is directed to providing a virtual reality device and method for registering at least one home appliance in an application and displaying at least one registered home appliance on a screen.

.In addition, the present disclosure is directed to providing a virtual reality device and method for controlling operation of at least one home appliance within a home through a screen provided by the virtual reality device.

.In addition, the present disclosure is directed to providing a virtual reality device and method for switching a screen for controlling operation of a home appliance to a virtual reality mode, displaying the switched screen, and controlling the operation of the home appliance requiring fire-control through the displayed screen.

.In addition, the present disclosure is directed to providing a virtual reality device and method for receiving a command to control a home appliance through a hand gesture, eye tracking, or a controller while wearing the virtual reality device.

.In addition, the present disclosure is directed to providing a virtual reality device and method for generating control logic to control operation of a home appliance that requires fire-control and transmitting the control logic to the home appliance.

.In addition, the present disclosure is directed to providing a system for conveniently controlling operation of a home appliance disposed at a distance while wearing a virtual reality device.

.Objects of the present disclosure are not limited to the above object, and other objects and advantages of the present disclosure that are not described can be understood by the following description and more clearly understood by embodiments of the present disclosure. In addition, it can be easily seen that the objects and advantages of the present disclosure can be achieved by devices and combinations thereof that are described in the claims.

.To achieve the above objects, a virtual reality device according to the present disclosure may receive application information for a portable terminal through pairing with the portable terminal, and switch the application information to a virtual reality mode and display the switched application information.

.In addition, the virtual reality device according to the present disclosure may request and display a list of at least one home appliance registered in an application for the portable terminal, request and acquire application information for a home appliance selected from the displayed list from the portable terminal, and install the acquired application information in the application for the virtual reality device.

.In addition, the virtual reality device according to the present disclosure may classify functions of the application by category based on the acquired application information, and assign an identifier to each classified function and store the identifiers.

.In addition, the virtual reality device according to the present disclosure may acquire a stored identifier related to the functions of the home appliance corresponding to the application selected among applications for the at least one home appliance, and generate a tree structure of the functions of the home appliance based on the acquired identifier.

.In addition, the virtual reality device according to the present disclosure may identify a command to control operation of the home appliance through a controller for controlling operation of the virtual reality device or a hand gesture of a user wearing the virtual reality device.

.In addition, the virtual reality device according to the present disclosure may display information indicating that a home appliance installed in the application for the virtual reality device is present in the list of the at least one home appliance received from the portable terminal, and when the home appliance is not present, may display information indicating that the home appliance is not installed in the application for the virtual reality device.

.In addition, the virtual reality device according to the present disclosure may acquire at least one image of a home appliance through a camera to identify the home appliance, request and acquire application information for the identified home appliance, and install the acquired application information in the application of the virtual reality device.

.In addition, the virtual reality device according to the present disclosure may request and acquire an identifier of the home appliance from the home appliance when the home appliance is not identified through the image acquired using the camera, and request and acquire application information for the home appliance corresponding to the acquired identifier.

.In addition, the virtual reality device according to the present disclosure may analyze the image acquired through the camera to identify at least one of a product name, model name, quick response (QR) code, and barcode of the home appliance.

.In addition, the virtual reality device according to the present disclosure may identify functions of each home appliance based on the analysis of the application information for at least one home appliance, classify the identified functions according to categories, and assign an identifier to each classified function.

.In addition, the virtual reality device according to the present disclosure may acquire a stored identifier related to functions of a home appliance corresponding to an application selected among the displayed applications for the at least one home appliance.

.In addition, the virtual reality device according to the present disclosure may generate control logic corresponding to an input command when the command to control the functions of the home appliance is input, and transmit information including the identifier for the functions and the control logic to the home appliance.

.In addition, the home appliance according to the present disclosure may operate based on the control logic received from the virtual reality device.

.In addition, the virtual reality device according to the present disclosure may acquire information on an event occurring in the home appliance in real time through pairing with the home appliance, and control the home appliance remotely based on the acquired information.

.In addition, the virtual reality device according to the present disclosure may switch a screen for controlling the operation of the home appliance to a virtual reality mode and display the switched screen based on the acquisition of the information on the event occurring in the at least one home appliance, generate control logic for controlling the operation of the home appliance based on the command input on the displayed screen, and transmit the generated control logic to the home appliance.

.In addition, the virtual reality device according to the present disclosure may pause a displayed operating screen and display the information on the event when the information on the event is acquired while the operating screen of the virtual reality device is being displayed.

.In addition, the virtual reality device according to the present disclosure may perform pairing with the home appliance and acquire the information on the event while the pairing is maintained.

.In addition, when the information on the event is acquired, the virtual reality device according to the present disclosure may display contact information for each member within a home and transmit a notification that the event has occurred in the home appliance to a portable terminal of a selected member among the displayed contact information.

.In addition, the virtual reality device according to the present disclosure may identify a command input on a displayed screen based on a controller for controlling operation of the virtual reality device, eye tracking, or a hand gesture of a user wearing the virtual reality device.

.According to the present disclosure, the virtual reality device may receive application information from the portable terminal through pairing with the portable terminal and display the application information by switching the application information to the virtual reality mode, thereby allowing the user to view a larger and more intuitive 3D home appliance control screen through the virtual reality device than the screen on the portable terminal, and to easily control the home appliance remotely.

.In addition, according to the present disclosure, the virtual reality device may request and obtain the application information for the selected home appliance from the portable terminal and install the acquired application information into the application for the virtual reality device, thereby allowing the user to conveniently control the home appliance even while wearing the virtual reality device.

.In addition, according to the present disclosure, the virtual reality device may display whether the home appliance is installed in the application for the virtual reality device, thereby allowing the user to easily identify the current status of the home appliance registered in the application for the virtual reality device.

.In addition, according to the present disclosure, the virtual reality device may identify the home appliance by acquiring at least one image of the home appliance through the camera, and then request and acquire the application information for the identified home appliance, thereby allowing the acquired application information to be conveniently installed into the application for the virtual reality device.

.In addition, according to the present disclosure, when the home appliance is not identified through the image acquired using the camera, the virtual reality device may request and acquire the identifier of the home appliance from the home appliance and the application information on the home appliance corresponding to the acquired identifier, thereby conveniently installing the acquired application information into the application for the virtual reality device.

.In addition, according to the present disclosure, the virtual reality device may analyze the image acquired through the camera to identify at least one of the product name, model name, quick response (QR) code, and barcode of the home appliance, thereby allowing the user to conveniently register the home appliance even while wearing the virtual reality device.

.In addition, the virtual reality device according to the present disclosure can provide convenience of use by switching the application for at least one home appliance based on the input of the command to switch the application to the virtual reality mode, or automatically switching the application to the virtual reality mode.

.In addition, the virtual reality device according to the present disclosure can facilitate screen configuration based on user task input by identifying the functions of each home appliance based on the analysis of the application information for at least one home appliance, classifying the identified functions according to categories, and assigning the identifiers to each classified function.

.In addition, the virtual reality device according to the present disclosure can facilitate screen configuration using sub-functions based on user menu selection by acquiring the stored identifiers related to the functions of the home appliance corresponding to the application selected from the applications of at least one home appliance displayed, and creating the tree structure of the functions of the home appliance.

.In addition, when receiving the command to control the functions of the home appliance, the virtual reality device according to the present disclosure may generate the control logic corresponding to the received command and transmit information including the identifier for the function and the control logic to the home appliance, thereby easily controlling the home appliance disposed at a distance even while wearing the virtual reality device.

.In addition, according to the present disclosure, based on the acquisition of information on an event occurring in at least one home appliance, the virtual reality device may switch the screen controlling the operation of the home appliance to the virtual reality mode and display the switched screen, generate control logic for controlling the operation of the home appliance based on commands input on the displayed screen, and transmit the control logic to the home appliance, thereby allowing the user wearing the virtual reality device to conveniently control the home appliance without removing the virtual reality device.

.In addition, according to the present disclosure, when the information on an event is acquired while the operation screen of the virtual reality device is being displayed, the virtual reality device may pause the operation screen being displayed and display the information on the event, thereby allowing the user to check the situation related to the event occurring in the home appliance in real time while viewing content.

.In addition, according to the present disclosure, the virtual reality device may perform pairing with the home appliance to acquire the information on the event from the home appliance in real time while the pairing is maintained.

.In addition, according to the present disclosure, when the information on the event is acquired, the virtual reality device may display the contact information of each member within the home, and transmit the occurrence of the event in the home appliance to the portable terminal of the selected member among the displayed contact information, thereby allowing the wearer to request another member to operate the home appliance even when the wearer is unable to remove the virtual reality device.

.In addition, according to the present disclosure, the virtual reality device may identify a command that is input on a displayed screen based on the controller for controlling the operation of the virtual reality device, eye tracking, or the hand gesture of the user wearing the virtual reality device, thereby allowing the user to input the command to control the operation of the home appliance in various ways.

.Specific effects of the present disclosure together with the above effects have been described together with a description of the following detailed matters for carrying out the invention.

### [BRIEF DESCRIPTION OF THE DRAWINGS]

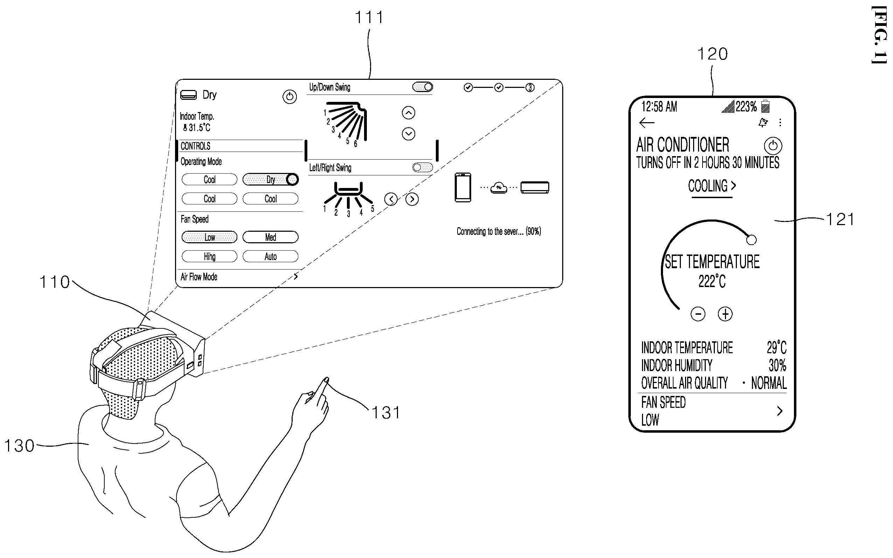

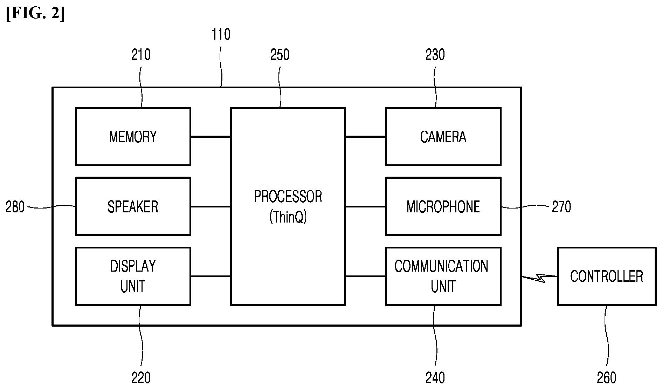

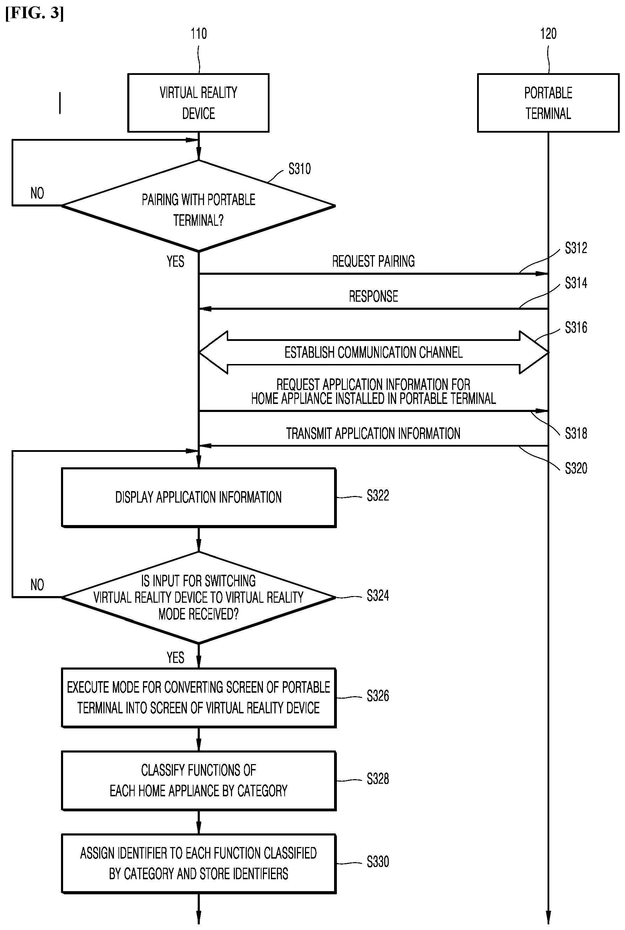

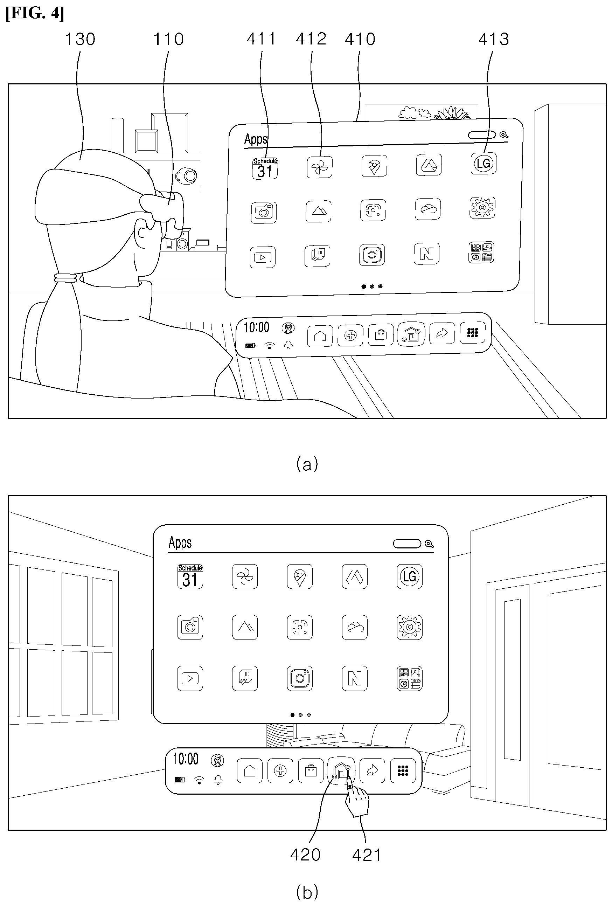

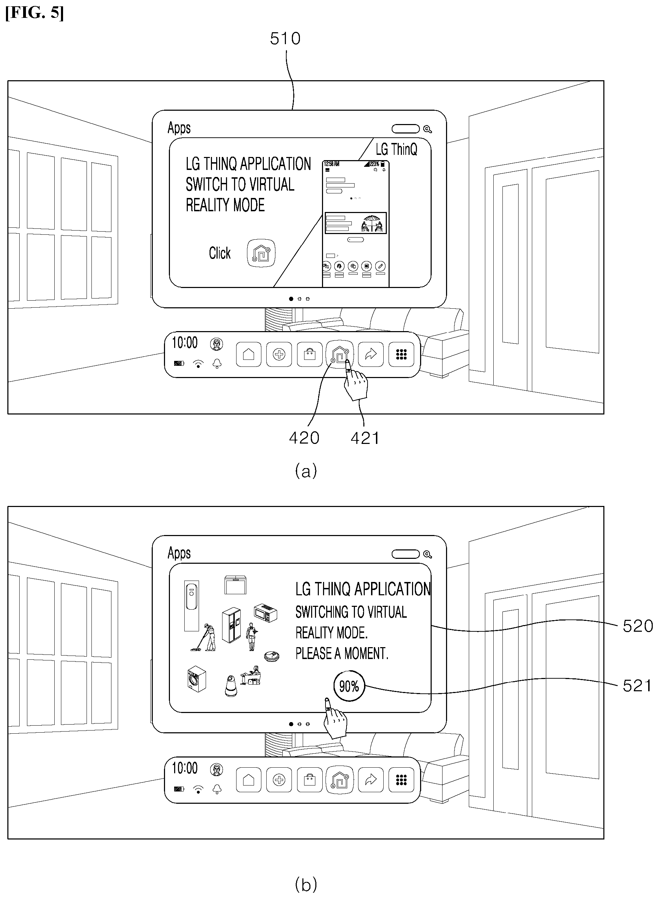

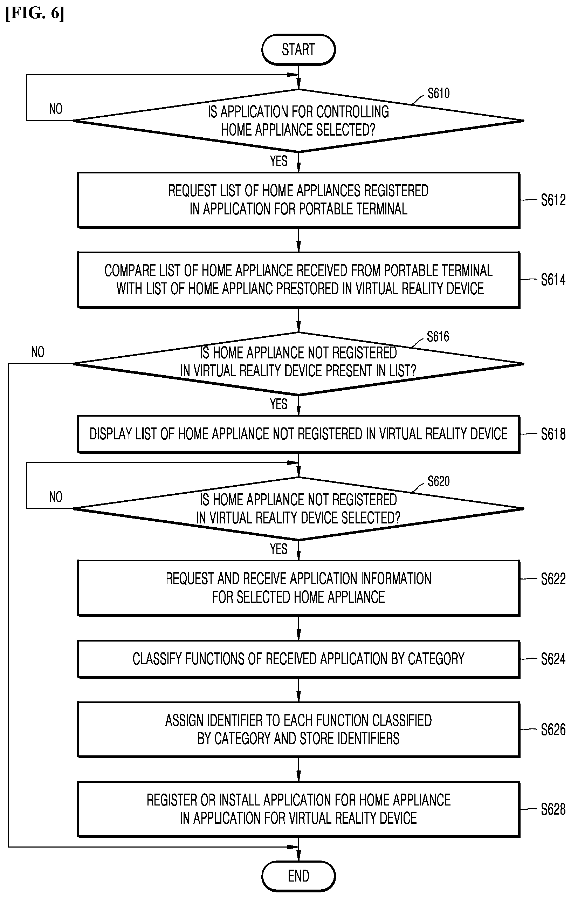

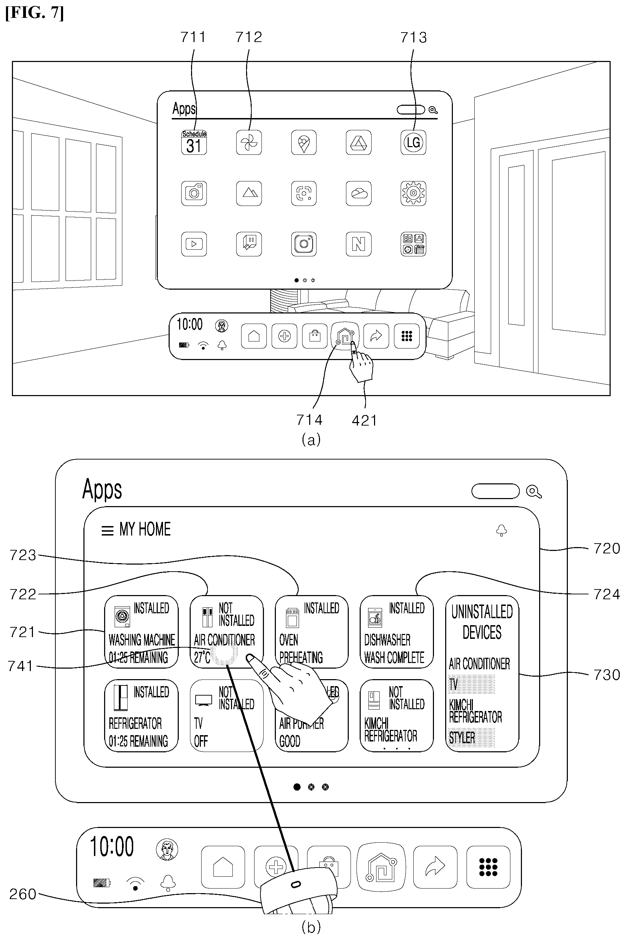

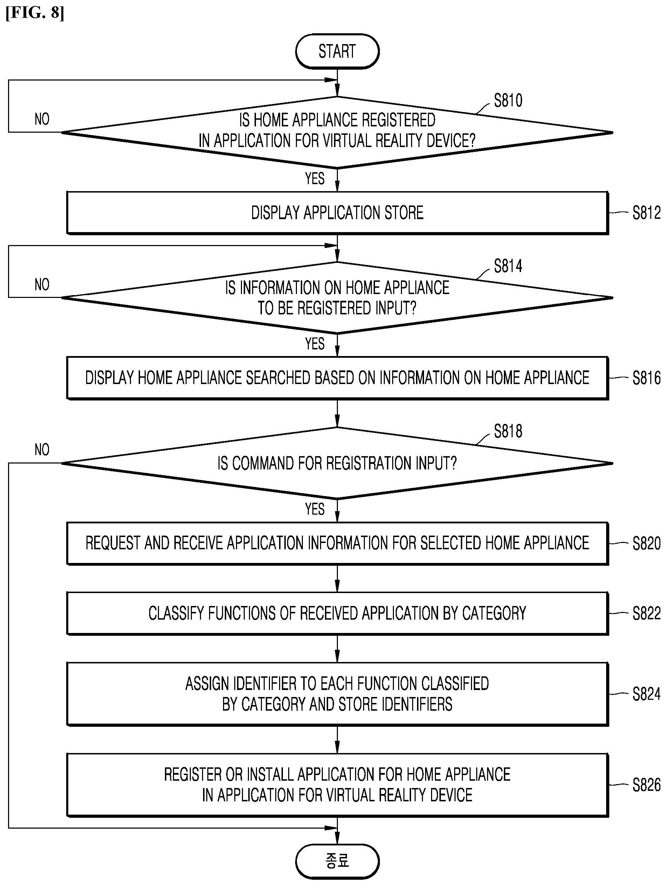

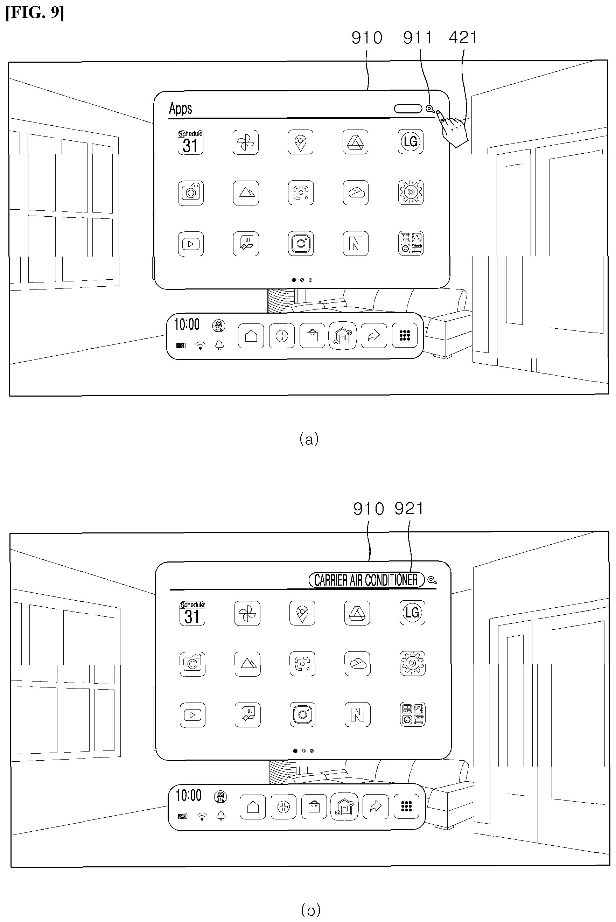

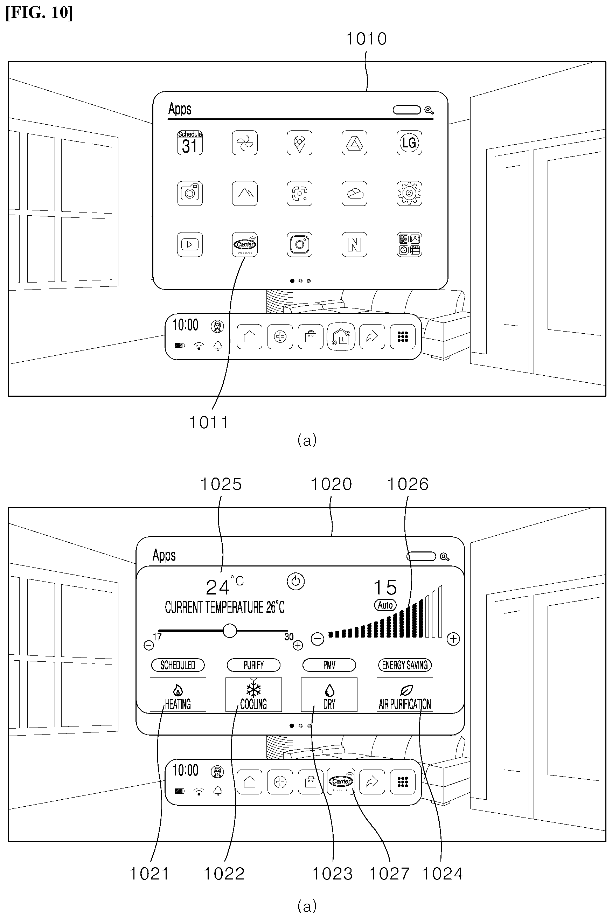

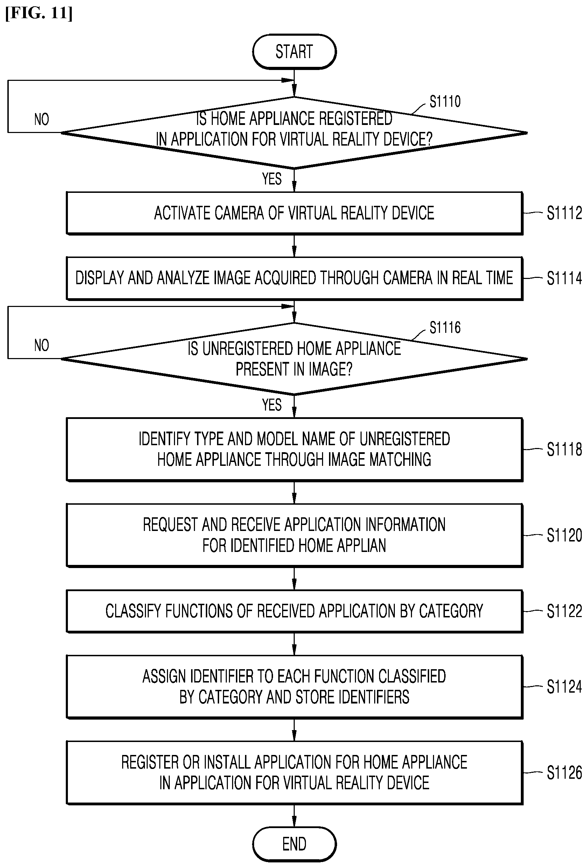

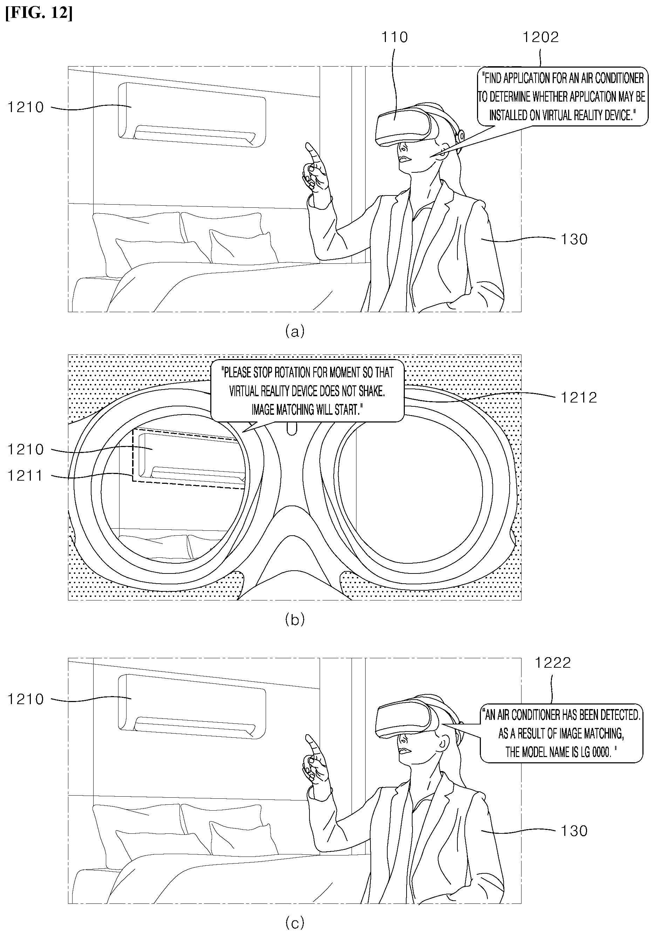

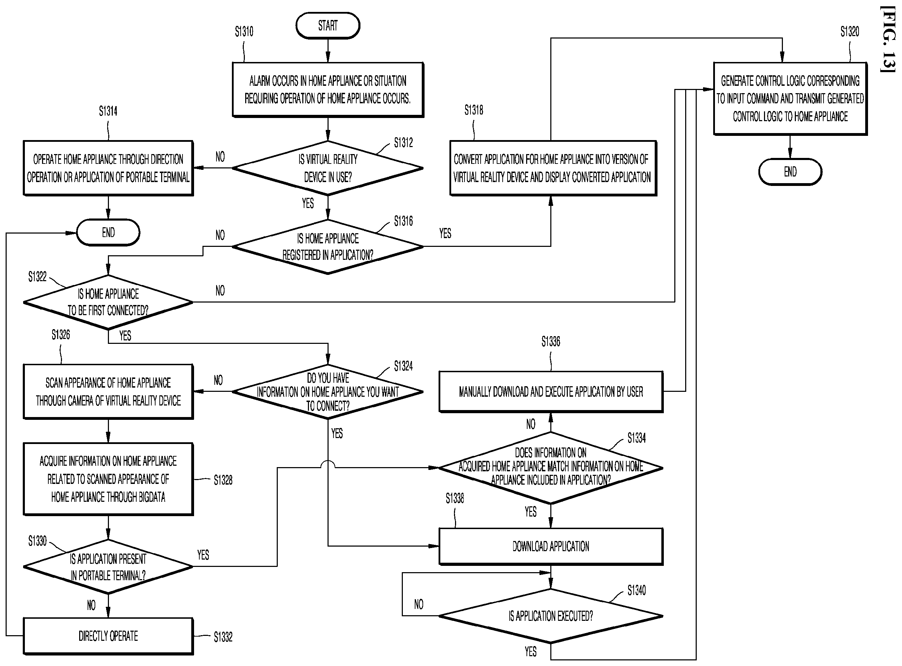

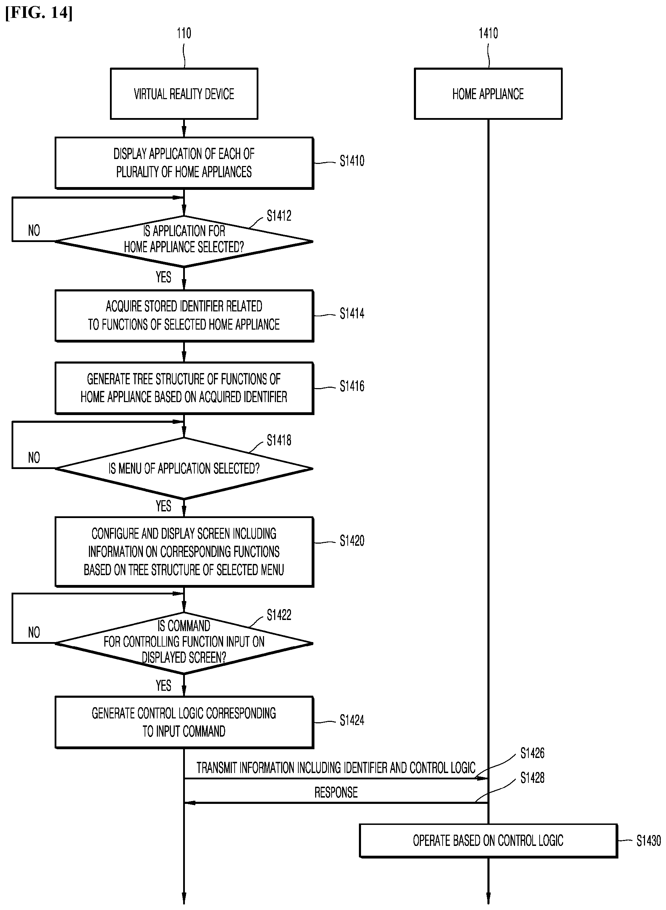

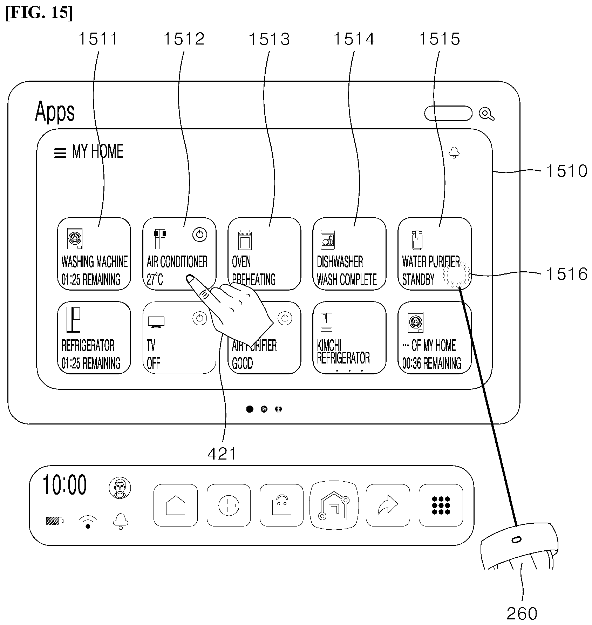

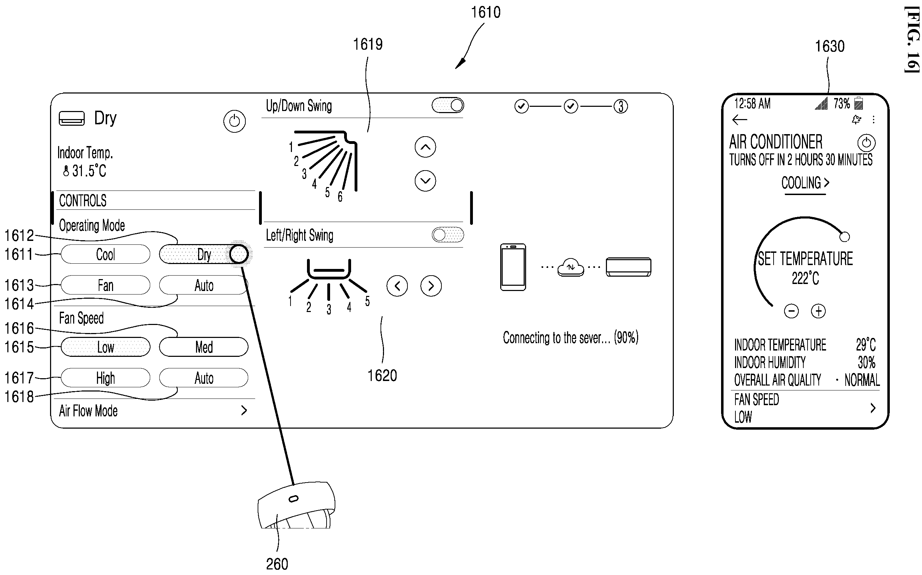

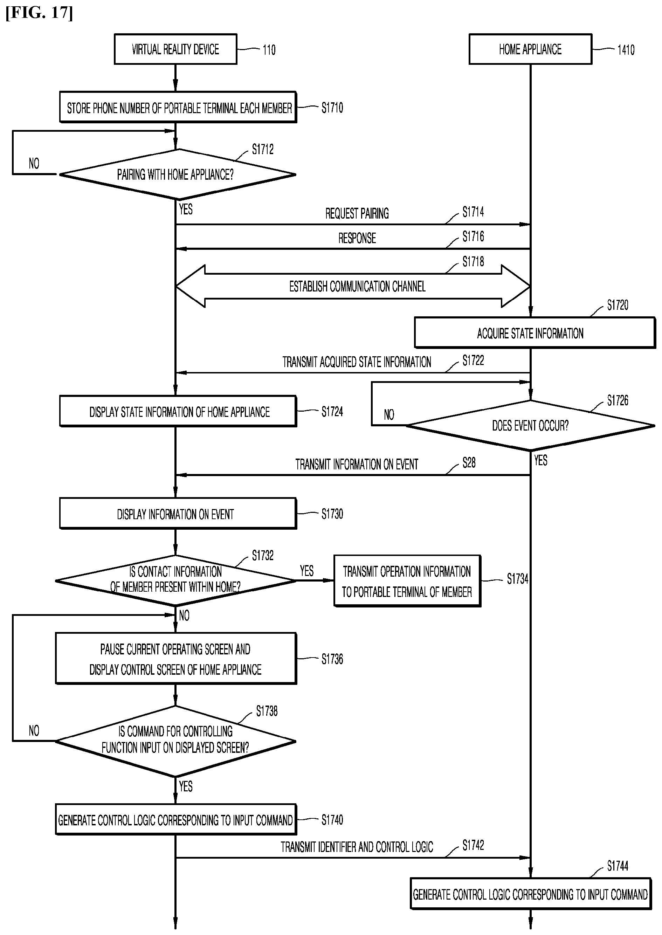

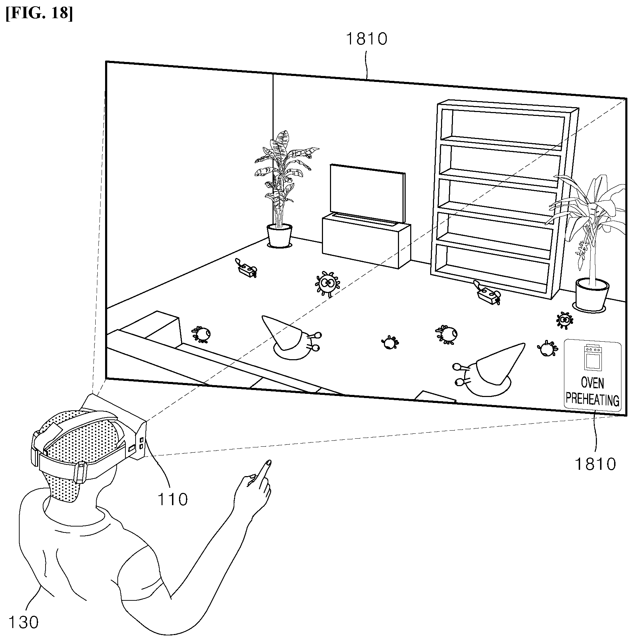

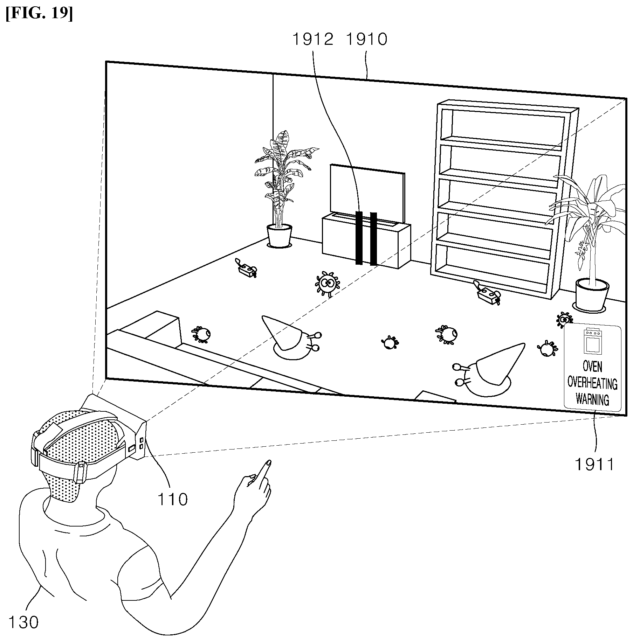

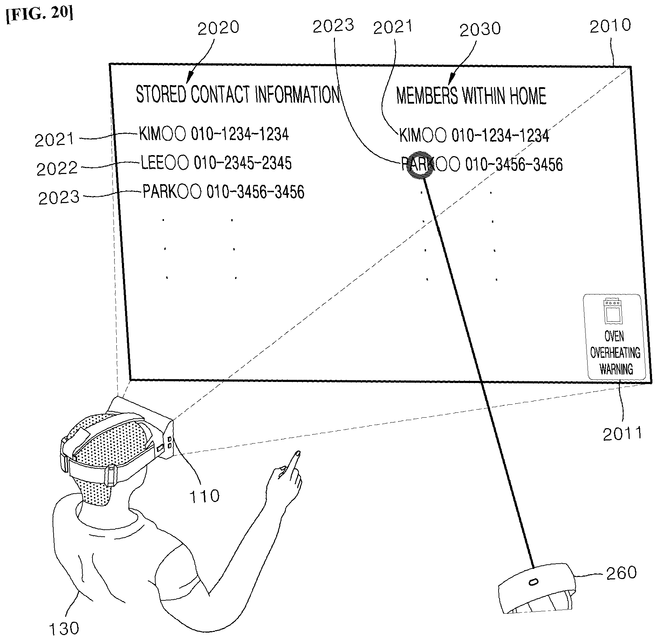

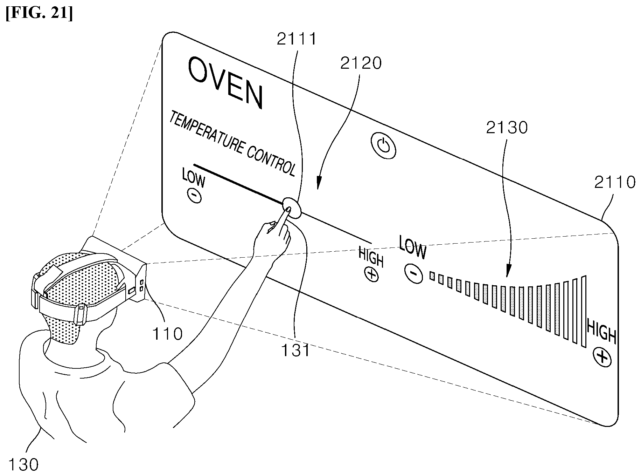

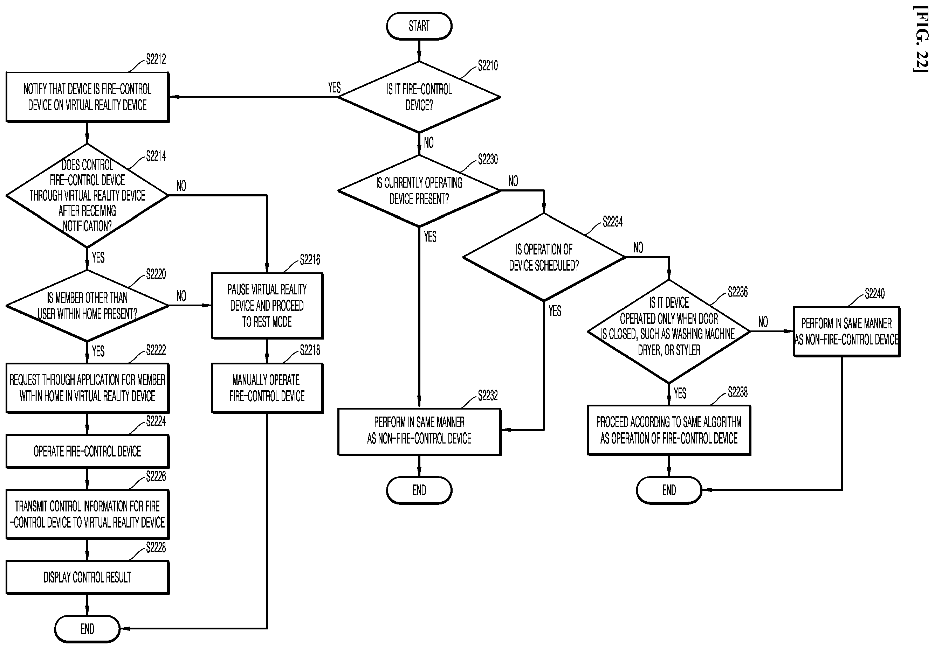

.FIG. 1 is an exemplary view showing a state in which a virtual reality device according to one embodiment of the present disclosure configures and displays a screen of a portable terminal.
.FIG. 2 is a block diagram of the virtual reality device according to one embodiment of the present disclosure.
.FIG. 3 is a flowchart showing a process of switching the virtual reality device to a virtual reality mode through pairing between the virtual reality device and the portable terminal according to one embodiment of the present disclosure.
.FIG. 4A is an exemplary view showing a state in which the virtual reality device according to one embodiment of the present disclosure displays the screen of the portable terminal.
.FIG. 4B is an exemplary view showing a state in which an application controlling at least one home appliance according to one embodiment of the present disclosure is selected through a hand gesture.
.FIG. 5A is an exemplary view showing a screen receiving a command to switch an application according to one embodiment of the present disclosure to the virtual reality mode for the virtual reality device.
.FIG. 5B is an exemplary view showing a state of switching the application according to one embodiment of the present disclosure to the virtual reality mode for the virtual reality device.
.FIG. 6 is a flowchart showing a process in which the virtual reality device according to one embodiment of the present disclosure receives and installs an application for a home appliance through the portable terminal.
.FIG. 7A is an exemplary view showing a state of selecting an application for the virtual reality device according to one embodiment of the present disclosure through a hand gesture.
.FIG. 7B is an exemplary view showing a state in which the virtual reality device according to one embodiment of the present disclosure displays a list of home appliances received from a portable terminal.
.FIG. 8 is a flowchart showing a process in which the virtual reality device according to one embodiment of the present disclosure receives and installs an application for a home appliance through an app store.
.FIG. 9A is an exemplary view showing a screen displayed on the virtual reality device according to one embodiment of the present disclosure.
.FIG. 9B is an exemplary view showing a state in which information of a home appliance is input on a screen displayed by the virtual reality device according to one embodiment of the present disclosure.
.FIG. 10A is an exemplary view showing a screen in which the application for a home appliance according to one embodiment of the present disclosure is registered in an application for a virtual reality device.
.FIG. 10B is an exemplary view showing a screen controlling the application for the home appliance registered in the application for the virtual reality device according to one embodiment of the present disclosure.
.FIG. 11 is a flowchart showing a process in which the virtual reality device according to one embodiment of the present disclosure receives and installs an application for a home appliance through an image of the home appliance.
.FIG. 12A is an exemplary view showing a state in which a user wearing the virtual reality device according to one embodiment of the present disclosure instructs the registration of a home appliance.
.FIG. 12B is an exemplary view showing a state in which the virtual reality device according to one embodiment of the present disclosure is scanning the home appliance.
.FIG. 12C is an exemplary view showing a state in which the virtual reality device according to one embodiment of the present disclosure has identified the home appliance.
.FIG. 13 is a flowchart showing a process of controlling operation of a home appliance using the virtual reality device according to one embodiment of the present disclosure.
.FIG. 14 is a flowchart showing a process of controlling the operation of the home appliance through the virtual reality device according to one embodiment of the present disclosure.
.FIG. 15 is an exemplary view showing applications for each of a plurality of home appliances through the virtual reality device according to one embodiment of the present disclosure.
.FIG. 16 is an exemplary view showing a state in which the virtual reality device according to one embodiment of the present disclosure has switched the screen of the portable terminal to the virtual reality mode and displayed the switched screen.
.FIG. 17 is a flowchart showing a process in which the virtual reality device according to one embodiment of the present disclosure controls operation of at least one home appliance.
.FIG. 18 is an exemplary view showing a state in which the virtual reality device according to one embodiment of the present disclosure is displaying an operation screen.
.FIG. 19 is an exemplary view showing a state in which the virtual reality device according to one embodiment of the present disclosure pauses a currently displayed operation screen and displays information on a received event.
.FIG. 20 is an exemplary view showing a state in which the virtual reality device according to one embodiment of the present disclosure displays contact information of members.
.FIG. 21 is an exemplary view showing a process in which a user wearing the virtual reality device according to one embodiment of the present disclosure controls operation of a home appliance through a hand gesture.
.FIG. 22 is a flowchart showing a process of controlling the operation of the home appliance through the virtual reality device according to one embodiment of the present disclosure.

### [DETAILED DESCRIPTION OF THE INVENTION]

.The above-described objects, features, and advantages will be described below in detail with reference to the accompanying drawings, and thus those skilled in the art to which the present disclosure pertains will be able to easily carry out the technical spirit of the present disclosure. In describing the present disclosure, when it is determined that a detailed description of the known technology related to the present disclosure may unnecessarily obscure the gist of the present disclosure, a detailed description thereof will be omitted. Hereinafter, exemplary embodiments according to the present disclosure will be described in detail with reference to the accompanying drawings. In the drawings, the same reference numerals are used to denote the same or similar components.

.Although "first," "second," and the like are used to describe various components, these components are not limited by these terms. These terms are used only to distinguish one component from another, and unless otherwise stated, it is obvious that a first component may be a second component.

.Hereinafter, the arrangement of an arbitrary component on an "upper portion (or lower portion)" of a component or "above (or under)" the component may not only mean that the arbitrary component is disposed in contact with an upper surface (or a lower surface) of the component, but also mean that other components may be interposed between the component and the arbitrary component disposed above (or under) the component.

.In addition, when a certain component is described as being "connected," "coupled," or "joined" to the other component, the components may be directly connected or joined, but it should be understood that another component may be "interposed" between the components, or the components may be "connected," "coupled," or "joined" through another component.

.Throughout the specification, unless otherwise stated, each element may be singular or plural.

.The singular expression used herein includes the plural expression unless the context clearly dictates otherwise. In the application, terms such as "composed of" or "comprising" should not be construed as necessarily including all of the various components or operations described in the specification and should be construed as not including some of the components or some of the operations or further including additional components or operations.

.Throughout the specification, when "A and/or B" is described, it means A, B, or A and B unless otherwise stated, and when "C to D" is described, it means C or more and D or less unless otherwise stated.

.Hereinafter, a virtual reality device and method for controlling operation of at least one home appliance and a system therefor according to some embodiments of the present disclosure will be described.

.FIG. 1 is an exemplary view showing a state in which a virtual reality device according to one embodiment of the present disclosure configures and displays a screen of a portable terminal.

.Referring to FIG. 1, a virtual reality device 110 may display a screen 111 created by configuring a screen 121 displayed on a portable terminal 120, and a user 130 wearing the virtual reality device 110 may view the screen 111 configured through the virtual reality device 110.

.The user 130 wearing the virtual reality device 110 may adjust, set, or control various functions on the screen 111 through a hand gesture 131. The virtual reality device 110 may include a virtual reality (VR) device, an augmented reality (AR) device, and a mixed reality (MR) device.

.To this end, the virtual reality device 110 may acquire application information for at least one home appliance from the portable terminal 120 through pairing with the portable terminal 120 and switch the acquired application to the virtual reality mode and display the switched screen. For example, when receiving a two-dimensional screen of an application for at least one home appliance from the portable terminal 120, the virtual reality device 110 may convert the received two-dimensional screen into a three-dimensional screen and display the converted screen.

. FIG. 2 is a block diagram of the virtual reality device according to one embodiment of the present disclosure.

. Referring to FIG. 2, the virtual reality device 110 according to one embodiment of the present disclosure may include a memory 210, a display unit 220, a camera 230, a communication unit 240, a microphone 270, a speaker 280, and a processor 250.

. The configuration of the virtual reality device 110 shown in FIG. 2 is according to one embodiment, and the components of the virtual reality device 110 are not limited to the embodiment shown in FIG. 2, and some components may be added, changed, or deleted as needed. For example, the virtual reality device 110 may include a controller 260 for transmitting various commands for an image displayed through the virtual reality device 110 and/or a lens (not shown).

. In addition, the virtual reality device 110 may include an eye tracking sensor (not shown) for tracking a wearer's eyeball, and the eye tracking sensor (not shown) may be disposed in a location within the virtual reality device 110 at which the wearer's eyeball is easily tracked. The processor 250 may identify which point the wearer is currently looking at through the tracking result of the eye tracking sensor (not shown).

. According to one embodiment, the memory 210 stores control logic or commands that enable operation in conjunction with at least one home appliance or portable terminal 120 within the home.

. In addition, the memory 210 stores an application (e.g., an LG ThinQ application) that controls operations of home appliances within the home and an application for at least one home appliance included in the application (e.g., an LG ThinQ application). In addition, the memory 210 may not only store various information on controlling the operations of the home appliances within the home through a screen displayed on the virtual reality device 110, but also commands or programs capable of performing the operations described in the present disclosure.

. In addition, the memory 210 stores commands for a virtual reality mode that configures the screen so that the current screen 121 of the portable terminal 120 is displayed on the virtual reality device 110. For example, the virtual reality mode is a mode that configures and displays (i.e., shows to the wearer of the virtual reality device 110) the current screen 121 of the portable terminal 120 so as to correspond to the wide screen shown through the virtual reality device 110.

. The virtual reality mode may convert a two-dimensional screen for an application for at least one home appliance from the portable terminal 120 into a three-dimensional screen. Through this virtual reality mode, the wearer can conveniently input a command using the controller 260, the eye tracking, or the hand gesture 131 through a screen larger than the screen of the portable terminal 120. In addition, the wearer can conveniently input the command on the three-dimensional screen through the eyes.

. According to one embodiment, the memory 210 may store contact information stored in the portable terminal 120. The virtual reality device 110 may acquire the contact information stored from the portable terminal 120 and store the acquired contact information in the memory 210.

. In addition, the memory 210 stores the contact information (e.g., phone number, email) for each family member within the home. These contact information may be used by the user 130 wearing the virtual reality device 110 to transmit information on an event occurring in the home appliance using the virtual reality device 110.

. According to one embodiment, the display unit 220 may display various screens of an application for at least one home appliance within the home. These screens are screens newly configured so that the current screen of the portable terminal 120 is suitable for the screen size of the virtual reality device 110 by the virtual reality mode.

. For example, the virtual reality device 110 and the portable terminal 120 may transmit and receive commands (e.g., control logic) in real time through pairing. For example, a command to control the function of a home appliance may be input through the application displayed on the portable terminal 120 and then transmitted to the corresponding home appliance, input through the application displayed on the virtual reality device 110, and then transmitted to the corresponding home appliance.

. In this way, the display unit 220 may display data processed or generated by the processor 250.

. According to one embodiment, the camera 230 may be disposed on a front surface of the virtual reality device 110 to acquire a forward image (e.g., home appliance) of the wearer. For example, the camera 230 may acquire images of the product name, model name, QR code attached to the appearance of the home appliance, and barcode. In addition, the camera 230 may transmit the acquired images to the processor 250.

. According to one embodiment, the communication unit 240 may include at least one circuit capable of receiving an application (e.g., an LG ThinQ application) for controlling the operations of the home appliances within the home and an application for at least one home appliance included in the application (e.g., an LG ThinQ application) from the portable terminal 120 or a server (not shown) (e.g., an LG ThinQ server).

. In addition, the communication unit 240 may communicate with at least one home appliance within the home or the portable terminal 120 based on short-range communication (e.g., Wi-Fi, Bluetooth, NFC (near field communication), or Beacon), and thus, may receive applications or transmit or receive commands, data, or control logic.

. In addition, the communication unit 240 may transmit a pairing request to the corresponding home appliance through a router (not shown) to pair with at least one home appliance within the home, and receive a response thereto. For example, the communication unit 240 may periodically transmit a signal for the pairing request to the home appliance (e.g., an air conditioner) and receive a response thereto under the control of the processor 250. The signal for the pairing request may include different information depending on the type, model, and function of the home appliance. Alternatively, the signal may include the same information regardless of the type, model, or function. For example, the router (not shown) may identify at least one home appliance within the home through a service set identifier (SSID).

. According to one embodiment, a microphone 270 may receive voice commands from the user 130 wearing the virtual reality device 110. In addition, the microphone 270 may recognize various sounds generated from home appliances.

. According to one embodiment, a speaker 280 may output sound related to images (e.g., movies, games, etc.) displayed on the display unit 220. In addition, when receiving various information (e.g., application information, pairing information, home appliance information) received from the portable terminal 120 or the server (not shown), the speaker 280 may output a notification to the user 130.

. In addition, the speaker 280 may output various sounds based on the operation results of the processor 250 and the controller 260.

. According to one embodiment, the controller 260 may transmit a command to control the operation of the virtual reality device 110 to the virtual reality device 110, or input the command on the screen displayed through the display unit 220. The controller 260 may be connected to the virtual reality device 110 in a wired or wireless manner.

. According to one embodiment, the processor 250 may generally control the components (e.g., the memory 210, the display unit 220, the camera 230, the communication unit 240, the microphone 270, the speaker 280) of the virtual reality device 110.

. For example, the processor 250 may be implemented as at least one physical element among application specific integrated circuits (ASICs), digital signal processors (DSPs), digital signal processing devices (DSPDs), programmable logic devices (PLDs), field programmable gate arrays (FPGAs), processors, microcontrollers, and microprocessors.

. The processor 250 may have an artificial intelligence algorithm embedded therein. The algorithm for such artificial intelligence may be implemented by the processor 250. The artificial intelligence, as a program that mimics the neural network of the human brain, may support deep learning algorithms that analyze, perceive, reason, and determine various data autonomously.

. According to one embodiment, the processor 250 may acquire application information for at least one home appliance (e.g., an air conditioner) from the portable terminal 120 or the server (not shown) through the communication unit 240 through pairing with the portable terminal 120. For example, the application information may include information on a home appliance (e.g., an air conditioner) (e.g., a model name, a product number, and a manufacturing date) and information on various functions by category for remotely controlling the home appliance (e.g., temperature control, humidity control, dehumidification control, airflow direction control, airflow speed control, and timer setting) (e.g., in a case of an air conditioner, natural wind, sleep wind, low, medium, and high). For example, the application information may include different information depending on the type of home appliance.

. According to one embodiment, when receiving the application information for at least one home appliance, the processor 250 may analyze the received application information and based on this, analyze what functions each home appliance may perform or what functions may be remotely controlled. Accordingly, the processor 250 may identify the functions of each home appliance based on the analysis of the application information for the at least one home appliance.

. According to one embodiment, the processor 250 may classify the identified functions of each home appliance by category and assign an identifier to each function classified according to the category and store the assigned identifier in the memory 210. For example, when the home appliance is an air conditioner, the processor 250 may classify the functions of the air conditioner by category (e.g., temperature control, humidity control, dehumidification control, wind direction control, wind speed control, timer setting), assign identifiers to the functions (e.g., natural wind, sleep wind, weak, medium, strong) according to the classified category (e.g., wind speed control), and then map each assigned identifier to the corresponding function and store the matching results in the memory 210.

. According to one embodiment, the processor 250 may display the application for the at least one home appliance through the display unit 220, and acquire the identifiers stored in the memory 210 related to the functions of the home appliance (e.g., an air conditioner) that correspond to the application selected by the controller 260, the hand gesture 131, or the eye tracking among the applications of at least one home appliance (e.g., an air conditioner, a washing machine, a refrigerator). To this end, the processor 250 may output a hand icon on the screen displayed through the display unit 220 when an input mode is selected as a hand gesture. In addition, the processor 250 may move the hand icon on the screen in a direction or at a position corresponding to the movement of an actual hand through the camera 230 and display the moved hand icon.

. In addition, the processor 250 may generate a tree structure of the functions (e.g., natural wind, sleep wind, low, medium, high) according to the category (e.g., wind speed control) of the home appliance (e.g., an air conditioner) based on the acquired identifiers and store the generated tree structure in the memory 210. For example, the identifiers for the functions (e.g., natural wind, sleep wind, low, medium, high) are classified as sub-identifiers of the corresponding category.

. According to one embodiment, the processor 250 may switch the application for the at least one home appliance to the virtual reality mode based on the input of the command to switch the application for the at least one home appliance to the virtual reality mode. For example, after the application displayed through the display unit 220 is selected, when receiving a command to allow the selected application to operate in the virtual reality mode, the processor 250 may generate a screen by classifying functions by category of the selected application using an identifier, and configure the generated screen to correspond to a wide screen through the display unit 220.

. Alternatively, the processor 250 may automatically switch the application for the at least one home appliance to the virtual reality mode based on the application information for the at least one home appliance acquired through the communication unit 240.

. According to one embodiment, the processor 250 may configure the application for the at least one home appliance received from the portable terminal 120 to be displayed through the virtual reality device 110 based on the virtual reality mode, and then display the application through the display unit 220.

. According to one embodiment, when the application displayed on the display unit 220 is selected, the processor 250 may configure a screen including information on sub-menus (e.g., natural wind, sleep wind, weak, medium, strong) of the corresponding functions based on the tree structure of the home appliance corresponding to the selected application (i.e., a tree structure of functions according to categories (e.g., wind speed control), and display the configured screen through the display unit 220, thereby allowing the user wearing the virtual reality device 110 to view larger and more diverse functions than on the screen of the portable terminal 120.

. According to one embodiment, the processor 250 may display the application for at least one home appliance appliance through the display unit 220, acquire from the memory 210 the identifiers stored regarding the functions of the home appliance corresponding to the application selected among the displayed application for the at least one home appliance, and generate a tree structure of the functions of the home appliance based on the acquired identifiers.

. According to one embodiment, when receiving a command to control the functions of the home appliance from the screen displayed through the display unit 220, the processor 250 may generate control logic corresponding to the input command, generate information including identifiers for the functions and the generated control logic, and then transmit the generated information to the home appliance through the communication unit 240.

. According to one embodiment, the processor 250 may acquire at least one image of the home appliance through the camera 230, and based on the acquired image, may identify the type or model name of the home appliance through artificial intelligence. In addition, the processor 250 may register the identified home appliance in the application (e.g., an LG ThinQ application) and acquire an application for the identified home appliance (e.g., air conditioner application). In addition, the processor 250 may application for the virtual reality device 110 to the virtual reality mode and display the application for the home appliance switched to the virtual reality mode through the display unit 220.

. In addition, the processor 250 may request a list of at least one home appliance registered in the application (e.g., an LG ThinQ application) for the portable terminal 120 from the portable terminal 120 through the communication unit 240 and display the list received from the portable terminal 120 through the display unit 220.

. The processor 250 may identify an application that controls the home appliance installed in the virtual reality device 110. In addition, the processor 250 may request a list of home appliances that are not installed (or not registered) in the application (e.g., an LG ThinQ application) from the portable terminal 120.

. Alternatively, the processor 250 may request a list of the at least one home appliance registered in the application (e.g., an LG ThinQ application) for the portable terminal 120 from the portable terminal 120. This request is performed periodically, or when a new home appliance is installed within the home, the request may be made to the portable terminal 120 by identifying the installation of the new home appliance using the SSID through a router (not shown).

. According to one embodiment, the processor 250 may display the list received from the portable terminal 120 (e.g., the list of the home appliances registered or installed in the application (e.g., an LG ThinQ application) for the portable terminal 120) through the display unit 220.

. For example, the processor 250 may display the list of the home appliances (e.g., air conditioner, refrigerator, washing machine) registered or installed in the application (e.g., an LG ThinQ application) for the portable terminal 120 (e.g., image of air conditioner, image of refrigerator, image of washing machine) through the display unit 220.

. According to one embodiment, the processor 250 may identify whether the home appliance installed in the application (e.g., an LG ThinQ application) for the virtual reality device 110 is present in the list of the at least one home appliance received from the portable terminal 120.

. In addition, when the home appliance installed in the application (e.g., an LG ThinQ application) for the virtual reality device 110 is present in the list, the processor 250 may display information (e.g., installed) indicating that the home appliance is installed in the application for the virtual reality device 110.

. When there is no home appliance installed in the application (e.g., an LG ThinQ application) for the virtual reality device 110 in the list, the processor 250 may display information (e.g., not installed) indicating that the home appliance is not installed in the application (e.g., an LG ThinQ application) for the virtual reality device 110 on the display unit 220. In addition, the processor 250 may display the list of the home appliances that are not installed in the application for the virtual reality device 110 to provide the user with the option to install the home appliance that is not installed in the application (e.g., an LG ThinQ application) for the virtual reality device 110.

. According to one embodiment, the processor 250 may request and acquire application information for the selected home appliance.

. When a home appliance to be installed on the application (e.g., an LG ThinQ application) for the virtual reality device 110 is selected from the list, the processor 250 may display an app store for downloading the selected application (e.g., an LG ThinQ application) for the virtual reality device 110 through the display unit 220. In addition, the processor 250 may acquire the application information for the home appliance from the server (not shown) based on the information (e.g., model name, product name) of the home appliance input through the displayed app store, and then register (or install) the application (e.g., an LG ThinQ application) for the virtual reality device 110.

. According to one embodiment, the processor 250 may classify the functions of the acquired application by category (e.g., temperature control, humidity control, dehumidification control, wind direction control, wind speed control, timer setting) based on the acquired application information, and assign an identifier to each function (e.g., natural wind, sleep wind, low, medium, high in the case of an air conditioner) for each classified category and store them in the memory 210.

. To this end, the processor 250 may identify that the application for the home appliance is selected through the controller 260 for controlling the operation of the virtual reality device 110, the eye tracking, or a hand icon 421 moving on the screen based on the hand gesture 131 of the user 130 wearing the virtual reality device 110.

. According to one embodiment, the processor 250 may acquire an identifier stored regarding the functions of the home appliance corresponding to the application selected among the at least one application for the home appliance displayed through the display unit 220, and generate a tree structure of the functions of the home appliance based on the acquired identifier, in a state in which the application for the at least one home appliance is displayed through the display unit 220.

. In addition, the processor 250 may configure a screen to display the application for the at least one home appliance through the virtual reality device 110 based on the tree structure of the functions of the home appliance, and then display the configured screen through the display unit 220.

. According to one embodiment, the processor 250 may acquire at least one image of a home appliance through the camera 230 and identify the home appliance through the acquired image. The processor 250 may analyze the acquired image to identify at least one of the product name, model name, QR code, and barcode of the home appliance. For example, the processor 250 may extract an object (e.g., the appearance of the home appliance) within the image by applying an image outline extraction algorithm (e.g., corner detection, Harris corner detection) to the at least one acquired image.

. In addition, the processor 250 may extract feature points of the home appliance included in the acquired image and identify the appearance of the home appliance corresponding to the outline formed by the extracted feature points. In addition, the processor 250 may analyze the model name and the like of the home appliance using the identified appearance.

. Alternatively, when the home appliance is not identified through the acquired image, the processor 250 may request and acquire the identifier (e.g., model name, product name) of the home appliance from the home appliance, and request and acquire the application information for the home appliance corresponding to the acquired identifier from the server (not shown) (or the portable terminal 120).

. In addition, when the application information for the identified home appliance is acquired from the server (not shown) (or the portable terminal 120), the processor 250 may install the acquired application information into the application for the virtual reality device 110.

. According to one embodiment, when the home appliance is not identified through the acquired image, the processor 250 may request the identifier of the home appliance from the home appliance, and acquire the application for the home appliance based on the identifier received in response to the request.

. For example, the processor 250 may acquire the application for the home appliance from the server (not shown) through the portable terminal 120 based on the identifier.

. According to one embodiment, the processor 250 may perform pairing with the home appliance and acquire information on an event occurring in the home appliance (e.g., a situation requiring emergency action by the user) through the communication unit 240 while the pairing is maintained.

. For example, when the home appliance is an induction cooker, the event may include a case in which broth overflows from a cooking appliance (determined by the induction cooker through a decrease in the weight of the cooking appliance by a weight sensor provided on the induction cooker).

. For example, when the home appliance is a gas range, the event may include a case in which the gas range is turned off due to broth overflowing from the cooking appliance (determined by the gas range through an odor detection sensor provided on the gas range).

. According to one embodiment, the processor 250 may perform pairing with the home appliance directly or perform pairing with the home appliance through the portable terminal 120.

. According to one embodiment, the processor 250 may acquire state information on the operation of the home appliance through the communication unit 240 and switch the acquired state information to the virtual reality mode and display the state information through the display unit 220.

. For example, when the information on the event of the home appliance is acquired while the operation screen of the virtual reality device 110 is being displayed, the processor 250 may pause the currently displayed operation screen and display the information on the event through the display unit 220.

. According to one embodiment, the processor 250 may acquire the information on the event occurring in at least one home appliance through the communication unit 240, and based on the acquisition of the information on the event, the processor 250 may display the contact information of each member through the display unit 220.

. In addition, the processor 250 may transmit information indicating that the event has occurred in the home appliance to the portable terminal of the member selected among the displayed contact information of each member through the communication unit 240. In this case, the home appliance may include a home appliance that requires control of the fire (e.g., induction, gas range, microwave, oven).

. According to one embodiment, after the information indicating that the event has occurred is transmitted to the portable terminal, when the information on the operation result of the home appliance is acquired through the communication unit 240, the processor 250 may switch the information on the operation result to the virtual reality mode and display the information about the operation result through the display unit 220.

. FIG. 3 is a flowchart showing a process of switching the virtual reality device to a virtual reality mode through pairing between the virtual reality device and the portable terminal according to one embodiment of the present disclosure. FIG. 4A is an exemplary view showing a state in which the virtual reality device according to one embodiment of the present disclosure displays the screen of the portable terminal. FIG. 4B is an exemplary view showing a state in which an application controlling at least one home appliance according to one embodiment of the present disclosure is selected through a hand gesture. FIG. 5A is an exemplary view showing a screen receiving a command to switch an application according to one embodiment of the present disclosure to the virtual reality mode for the virtual reality device. FIG. 5B is an exemplary view showing a state of switching the application according to one embodiment of the present disclosure to the virtual reality mode for the virtual reality device.

. Hereinafter, a process of switching a virtual reality device to a virtual reality mode through pairing between the virtual reality device and a portable terminal according to one embodiment of the present disclosure will be described in detail with reference to FIGS. 3, 4A, 4B, 5A, and 5B as follows.

. According to one embodiment, the virtual reality device 110 may identify whether a command to pair with the portable terminal 120 is input (S310). The virtual reality device 110 (e.g., the processor 250) may receive a command to reconfigure and display a screen (e.g., a screen of an application that allows the portable terminal 120 to control a home appliance) displayed on the portable terminal 120 through the input by the controller 260, the eye tracking, and/or the input by the hand icon based on the movement of the hand gesture 131 of the user wearing the virtual reality device 110 on a wider screen through the display unit 220 of the virtual reality device 110. The hand icon may be moved and displayed on the screen in a direction or at a position corresponding to the movement of the actual hand under the control of the processor 250.

. According to one embodiment, the virtual reality device 110 may request pairing with the portable terminal 120 (S312). When receiving the command, the virtual reality device 110 (e.g., the processor 250) may request pairing with the portable terminal 120 by activating short-range communication (e.g., Wi-Fi, Bluetooth, NFC, or Beacon). Alternatively, the virtual reality device 110 may request pairing with the portable terminal 120 through a router (not shown).

. This request is intended to display the screen displayed on the portable terminal 120 more prominently through the display unit 220 of the virtual reality device 110. In addition, this request is a request to display a screen of an application controlling a home appliance displayed on the portable terminal 120 by configuring a new screen to correspond to the screen displayed on the display unit 220 of the virtual reality device 110.

. According to one embodiment, the portable terminal 120 may respond to a pairing request (S314).

. According to one embodiment, the virtual reality device 110 may establish a communication channel with the portable terminal 120 (S316). When receiving a response (e.g., an acknowledgment) from the portable terminal 120, the virtual reality device 110 (e.g., the processor 250) may establish a wired or wireless channel (e.g., Wi-Fi, Bluetooth, NFC, or Beacon) with the portable terminal 120 through the communication unit 240. For example, the virtual reality device 110 may establish a direct communication channel with the portable terminal 120 through a wireless channel, or establish an indirect communication channel with the portable terminal 120 through a router (not shown).

. This communication channel may be maintained while the screen of the portable terminal is displayed through the virtual reality device 110. That is, the virtual reality device 110 may transmit a command to display the screen of the portable terminal to the portable terminal 120 in real time through the communication channel. Alternatively, the virtual reality device 110 may transmit a command to control the operation of the home appliance to the home appliance in real time.

. According to one embodiment, the virtual reality device 110 may request application information for the home appliance installed on the portable terminal 120 (S318). The virtual reality device 110 (e.g., the processor 250) may request, through the established communication channel, information on the application installed on the portable terminal 120 for controlling at least one home appliance registered in the application (e.g., a ThinQ application), the information including information on the home appliance (e.g., a product name, a model name) and functions according to categories supported by each application (e.g., temperature control, humidity control, dehumidification control, airflow direction control, airflow speed control, timer setting) (e.g., in a case of an air conditioner, natural wind, sleep wind, weak, medium, strong).

. According to one embodiment, the portable terminal 120 may transmit application information to the virtual reality device 110 (S320). The portable terminal 120 may transmit, to the virtual reality device 110, information on an application installed on the portable terminal 120 for controlling at least one home appliance registered in an application (e.g., a ThinQ application), the information including information on the home appliance (e.g., a product name and a model name) and functions according to categories supported by each application (e.g., temperature control, humidity control, dehumidification control, airflow direction control, airflow speed control, and timer setting) (e.g., in a case of an air conditioner, natural wind, sleep wind, low, medium, and high).

. According to one embodiment, the virtual reality device 110 may display the application information (S322). The virtual reality device 110 (e.g., the processor 250) may display an application for at least one home appliance received from the portable terminal 120 through the display unit 220, and the user wearing the virtual reality device 110 may view the displayed application.

. Referring to FIGS. 4A and 4B, after a communication channel based on pairing is established between the virtual reality device 110 and the portable terminal 120, the virtual reality device 110 may receive application information from the portable terminal 120. In addition, the virtual reality device 110 outputs the information displayed on the portable terminal 120 through a screen 410 of the virtual reality device 110, and thus the user 130 wearing the virtual reality device 110 may view the screen displayed on the portable terminal 120 through the virtual reality device 110.

. The screen 410 displayed through the virtual reality device 110 may include various applications 411, 412, and 413.

. In addition, the user 130 wearing the virtual reality device 110 may select the application 420 (e.g., a ThinQ application) that controls at least one home appliance within the home through the hand icon 421 formed by the movement of the hand gesture 131.

. Alternatively, the user 130 wearing the virtual reality device 110 may select the application 420 (e.g., a ThinQ application) that controls at least one home appliance within the home through the controller 260.

. According to one embodiment, the virtual reality device 110 may identify whether an input for switching the virtual reality device to the virtual reality mode is received (S324). In a state in which the user wears the virtual reality device 110, the virtual reality device 110 (e.g., the processor 250) may identify whether the command for switching an application for at least one home appliance (or applications for all home appliances) to the virtual reality mode is received. For example, the virtual reality device 110 may identify whether a command is input through the controller 260 and/or the hand icon 421 for configuring and displaying the current screen 121 of the portable terminal 120 so as to correspond to a wide screen displayed through the virtual reality device 110 (i.e., displayed to the wearer of the virtual reality device 110).

. According to one embodiment, the virtual reality device 110 may execute the virtual reality mode that converts the screen of the portable terminal into the screen of the virtual reality device (S326). The virtual reality device 110 (e.g., the processor 250) may execute the virtual reality mode that configures a screen including functions included in the current screen 121 and functions not included in the current screen 121 to display the current screen 121 of the portable terminal 120 to the user more largely through the virtual reality device 110.

. Referring to FIGS. 5A and 5B, when the application 420 (e.g., a ThinQ application) that controls at least one home appliance is selected, the virtual reality device 110 may display a screen 510 that receives an input for switching the virtual reality device to the virtual reality mode. The screen 510 may include a button 511 for switching the virtual reality device to the virtual reality mode.

. The user 130 wearing the virtual reality device 110 may select the button 511 through the hand icon 421 by the hand gesture 131. Alternatively, the user 130 wearing the virtual reality device 110 may select the button 511 through the controller 260.

. When the button 511 is selected, the virtual reality device 110 may switch the application for at least one home appliance to the virtual reality mode to display the screen of the application displayed on the portable terminal 120 to correspond to the screen size of the virtual reality device 110. In addition, the virtual reality device 110 may display, in real time, progress 521 of switching an application for at least one home appliance to a virtual reality mode.

. According to one embodiment, the virtual reality device 110 may classify functions for each home appliance according to categories (S328). When the virtual reality device 110 (e.g., the processor 250) is executed in the virtual reality mode, the virtual reality device 110 may classify functions according to the categories of the home appliance by analyzing the application information for each home appliance received from the portable terminal 120. For example, when a home appliance is an air conditioner, the virtual reality device 110 may classify functions of the air conditioner by category (e.g., temperature control, humidity control, dehumidification control, airflow direction control, airflow speed control, and timer setting), and may classify functions corresponding to each category (e.g., in a case where the category is temperature control, natural wind, sleep wind, low, medium, and high).

. According to one embodiment, the virtual reality device 110 may assign identifiers to each function classified by category and store the identifiers (S330). The virtual reality device 110 (e.g., the processor 250) may assign the identifiers to the categories of each home appliance and the functions of each category, respectively, and store the identifiers in the memory 210. The virtual reality device 110 may generate a tree structure based on the categories and functions of each home appliance, assign a unique identifier to each category and each function included in the generated tree structure, and store the identifiers in the memory 210.

. Through this tree structure, when one category is selected, the functions corresponding to the selected category may be selected. Accordingly, the virtual reality device 110 may configure the screen to include the functions included in the selected category (i.e., sub-functions of the selected category) and displays the screen on the display unit 220, and thus, the user wearing the virtual reality device 110 may view larger and more diverse functions through the screen of the virtual reality device 110 than on the portable terminal 120.

. FIG. 6 is a flowchart showing a process in which the virtual reality device according to one embodiment of the present disclosure receives and installs an application for a home appliance through the portable terminal. FIG. 7A is an exemplary view showing a state of selecting an application for the virtual reality device according to one embodiment of the present disclosure through a hand gesture. FIG. 7B is an exemplary view showing a state in which the virtual reality device according to one embodiment of the present disclosure displays a list of home appliances received from a portable terminal.

. Hereinafter, a process in which the virtual reality device according to the embodiment of the present disclosure receives and installs an application for a home appliance through a portable terminal will be described in detail with reference to FIGS. 6, 7A, and 7B as follows.

. According to one embodiment, the virtual reality device 110 (e.g., the processor 250) may identify whether an application for controlling a home appliance is selected (S610). An application (e.g., an LG ThinQ application) capable of controlling at least one home appliance within the home is installed on the virtual reality device 110. When the virtual reality device 110 is executed, such an application (e.g., an LG ThinQ application) may be included on a main screen.

. Referring to FIG. 7A, after a communication channel is established between the virtual reality device 110 (e.g., the processor 250) and the portable terminal 120, the virtual reality device 110 may receive application information from the portable terminal 120. In addition, the virtual reality device 110 may output the information displayed on the portable terminal 120 through the screen 710 of the virtual reality device 110. The user 130 wearing the virtual reality device 110 may view the screen displayed on the portable terminal 120 through the virtual reality device 110. For example, the virtual reality device 110 may display a screen 710 including an application for controlling at least one home appliance within the home through the display unit 220.

. In addition, the user 130 wearing the virtual reality device 110 may select an application 714 (e.g., an application (e.g., an LG ThinQ application) installed on the virtual reality device 110 to control the operations of home appliances within the home) included on the screen 710 using the hand icon 421 through the hand gesture 131.

. In this way, the user 130 wearing the virtual reality device 110 may select the application 714 (e.g., a ThinQ application) that controls at least one home appliance within the home through the hand icon 421 formed by the movement of the hand gesture 131.

. Alternatively, the user 130 wearing the virtual reality device 110 may select the application 420 (e.g., a ThinQ application) for controlling at least one home appliance within the home through the controller 260.

. For example, the virtual reality device 110 (e.g., the processor 250) may identify whether the application (e.g., an LG ThinQ application) for controlling the home appliance is selected through the controller 260 for controlling the operation of the virtual reality device 110, eye tracking, or the hand icon 421 moving on the screen based on the hand gesture 131 of the user 130 wearing the virtual reality device 110.

. According to one embodiment, the virtual reality device 110 (e.g., the processor 250) may request a list of home appliances registered in the application on the portable terminal (S612). When the application (e.g., an LG ThinQ application) is selected, the virtual reality device 110 (e.g., the processor 250) may request a list of the home appliances registered in the application (e.g., an LG ThinQ application) installed on the portable terminal 120.

. To this end, the virtual reality device 110 and the portable terminal 120 may be directly connected through a wireless channel or connected through a wireless channel through a router (not shown).

. According to one embodiment, the virtual reality device 110 (e.g., the processor 250) may compare a list of home appliances received from the portable terminal with a list of home appliances prestored in the virtual reality device (S614). In response to a request for a list of home appliances, the virtual reality device 110 (e.g., the processor 250) may acquire the list of the home appliances registered in the application (e.g., an LG ThinQ application) for the portable terminal 120 through the communication unit 240.

. Then, the virtual reality device 110 (e.g., the processor 250) may compare the list of the home appliances registered in the application (e.g., an LG ThinQ application) for the portable terminal 120 with the list of the home appliances registered in the application (e.g., an LG ThinQ application) for the virtual reality device 110.

. According to one embodiment, the virtual reality device 110 (e.g., the processor 250) may identify whether there are home appliances in the list that are not registered in the virtual reality device (S616). The virtual reality device 110 (e.g., the processor 250) may identify whether there are home appliances that are registered in the application (e.g., an LG ThinQ application) for the portable terminal 120 but are not registered in the application (e.g., an LG ThinQ application) for the virtual reality device 110.

. For example, when it is determined that an application for a specific home appliance (e.g., an air conditioner) is not installed in the application (e.g., an LG ThinQ application) for the virtual reality device 110, the virtual reality device 110 (e.g., the processor 250) may determine that an application for a specific home appliance (e.g., an air conditioner) needs to be installed in the application (e.g., an LG ThinQ application) for the virtual reality device 110.

. According to one embodiment, the virtual reality device 110 (e.g., the processor 250) may display a list of home appliances that are not registered in the virtual reality device (S618). The virtual reality device 110 (e.g., the processor 250) may display information (e.g., home appliance name, non-installation notice information) on at least one home appliance that is not installed in the virtual reality device. In addition, the virtual reality device 110 (e.g., the processor 250) may display information (e.g., appliance name, installation guide information) on at least one home appliance installed in the virtual reality device on the display unit 220.

. According to one embodiment, the virtual reality device 110 (e.g., the processor 250) may identify whether the home appliance not registered in the virtual reality device is selected (S620). The virtual reality device 110 (e.g., the processor 250) may identify whether a specific home appliance not installed in the virtual reality device (e.g., an air conditioner) is selected through the controller 260, eye tracking, or the hand icon 421 by the hand gesture 131 while displaying information (e.g., appliance name, installation guide information) on the home appliances not installed in the virtual reality device on the display unit 220.

. Referring to FIG. 7B, the virtual reality device 110 (e.g., the processor 250) may display a screen 720 including applications 721, 722, 723, and 724 for controlling the operation of each of a plurality of home appliances through the display unit 220.

. For example, the screen 720 may include a screen 730 including the list of the home appliances not installed in the virtual reality device 110.

. For example, the screen 720 may include the application 721 for controlling operation of a washing machine, the application 722 for controlling operation of an air conditioner, the application 723 for controlling operation of an oven, the application 724 for controlling operation of a dishwasher, etc.

. For example, the information of each application may include information indicating whether the application is installed on the virtual reality device 110 (e.g., installed or not installed).

. According to one embodiment, the user 130 wearing the virtual reality device 110 may select the application 722 for controlling a home appliance (e.g., an air conditioner) through the hand icon 421 based on the movement of the hand gesture 131, or may select the application 722 for controlling the home appliance (e.g., an air conditioner) through the controller 260.

. The virtual reality device 110 (e.g., the processor 250) may identify which application has been selected through the input using the hand icon 421 by the hand gesture 131 or the controller 260.

. According to one embodiment, the virtual reality device 110 (e.g., the processor 250) may request and receive application information for the selected home appliance (S622). The virtual reality device 110 (e.g., the processor 250) may request the application information for the selected home appliance from the portable terminal 120 through the communication unit 240 and receive the application information for the selected home appliance from the portable terminal 120 through the communication unit 240.

. Alternatively, the virtual reality device 110 (e.g., the processor 250) may request the application information for the selected home appliance from a server (not shown) through the communication unit 240 and receive the application information for the selected home appliance from the server (not shown) through the communication unit 240. This request is performed periodically by the virtual reality device 110 (e.g., the processor 250), or when a new home appliance is installed within the home, the virtual reality device 110 (e.g., the processor 250) may identify the installation of the new home appliance through an SSID through a router (not shown) and make a request to the portable terminal 120 or the server (not shown).

. According to one embodiment, the virtual reality device 110 (e.g., the processor 250) may classify the functions of the received application information by category (S624). The virtual reality device 110 (e.g., the processor 250) may classify the functions according to the category of the home appliance by analyzing the application information for the home appliance received from the portable terminal 120. For example, the virtual reality device 110 may classify functions of a home appliance (e.g., an air conditioner) by category (e.g., temperature control, humidity control, dehumidification control, airflow direction control, airflow speed control, and timer setting), and may classify functions corresponding to each category (e.g., in a case where the category is temperature control, natural wind, sleep wind, low, medium, and high). Such categories or functions may vary depending on a type or model of the home appliance.

. According to one embodiment, the virtual reality device 110 (e.g., the processor 250) may assign an identifier to each function classified by category and store the identifier (S626). The virtual reality device 110 (e.g., the processor 250) may assign an identifier to each function by category of the home appliance, match the identifiers with the functions, and store the identifiers in the memory 210. The virtual reality device 110 may generate a tree structure based on the categories and functions of the home appliances, assign a unique identifier to each category and each function included in the generated tree structure, and store the identifiers in the memory 210.

. Through this tree structure, when one category is selected, the functions corresponding to the selected category may be selected.

. According to one embodiment, the virtual reality device 110 (e.g., the processor 250) may register or install an application for a home appliance in an application for a virtual reality device (S628). The virtual reality device 110 (e.g., the processor 250) may register (or install) the application for the home appliance received in operation S622 to the application (e.g., a ThinQ application) for the virtual reality device 110.

. For example, when the virtual reality device 110 is executed in a state in which the application for the home appliance is registered in the application (e.g., a ThinQ application) for the virtual reality device 110, the virtual reality device 110 (e.g., the processor 250) may include the application for the home appliance registered in the home screen and display the application on the display unit 220.

. FIG. 8 is a flowchart showing a process in which the virtual reality device according to one embodiment of the present disclosure receives and installs an application for a home appliance through an app store. FIG. 9A is an exemplary view showing a screen displayed on the virtual reality device according to one embodiment of the present disclosure. FIG. 9B is an exemplary view showing a state in which information of a home appliance is input on a screen displayed by the virtual reality device according to one embodiment of the present disclosure. FIG. 10A is an exemplary view showing a screen in which the application for a home appliance according to one embodiment of the present disclosure is registered in an application for a virtual reality device. FIG. 10B is an exemplary view showing a screen controlling the application for the home appliance registered in the application for the virtual reality device according to one embodiment of the present disclosure.

. Hereinafter, a process in which the virtual reality device according to one embodiment of the present disclosure receives and installs an application for a home appliance through an app store and controls the corresponding home appliance through the installed application will be described in detail with reference to FIGS. 8, 9A, 9B, 10A, and 10B as follows.

. The home appliances described in FIGS. 8, 9A, 9B, 10A, and 10B include not only home appliances manufactured by LG Electronics, but also home appliances manufactured by other manufacturers (e.g., Samsung, Carrier).

. According to one embodiment, the virtual reality device 110 (e.g., the processor 250) may identify whether a command to register a home appliance in an application for the virtual reality device is received (S810). The virtual reality device 110 (e.g., the processor 250) may identify whether a specific home appliance not installed in the virtual reality device (e.g., an air conditioner) is selected through the controller 260, eye tracking, or the hand icon 421 by the hand gesture 131 while displaying information (e.g., appliance name, installation guide information) on the home appliances not installed in the virtual reality device on the display unit 220.

. According to one embodiment, the virtual reality device 110 (e.g., the processor 250) may display an app store (S812). When receiving the command to register the home appliance in the application for the virtual reality device 110 (e.g., the processor 250), the virtual reality device 110 (e.g., the processor 250) may display an app store in which applications for various home appliances may be downloaded. For example, the virtual reality device 110 (e.g., the processor 250) may display the app store on the display unit 220 so that applications for home appliances produced by manufacturers other than those produced by a specific manufacturer (e.g., LG) may be registered or installed in the application (e.g., an LG ThinQ application) for the virtual reality device 110.

. According to one embodiment, the virtual reality device 110 (e.g., the processor 250) may identify whether information of a home appliance to be registered is input (S814). The virtual reality device 110 (e.g., the processor 250) may identify whether information (e.g., model name, product name, etc.) on the home appliance to be registered in the app store displayed on the display unit 220 is input.

. Referring to FIGS. 9A and 9B, the virtual reality device 110 (e.g., the processor 250) may display information displayed on the portable terminal 120 through a screen 910 of the virtual reality device 110. The screen 910 may include a search menu 911 for receiving information (e.g., product name, model name) on a home appliance to be registered.

. The user 130 wearing the virtual reality device 110 may select the search menu 911 included on the screen 910 using the hand icon 421 through the hand gesture 131.

. In this way, after selecting the search menu 911 through the hand icon 421 by the movement of the hand gesture 131, the user 130 wearing the virtual reality device 110 may input information 921 of a home appliance to be registered in an application (e.g., a ThinQ application) for the virtual reality device 110. This input may include text input or voice input that is input after the search menu 911 is selected.

. According to one embodiment, the virtual reality device 110 (e.g., the processor 250) may display the home appliance searched based on the information on the home appliance (S816). The virtual reality device 110 (e.g., the processor 250) may display a home appliance corresponding to the information (e.g., model name, product name) on the home appliance input into the app store on the display unit 220.

. According to one embodiment, the virtual reality device 110 (e.g., the processor 250) may identify whether a command for registration is input (S818). The virtual reality device 110 (e.g., the processor 250) may identify whether a command for registering (or installing) the application for the displayed home appliance in the application for the virtual reality device 110 (e.g., an LG ThinQ) is input through the controller 260, the eye tracking, or the hand icon 421 by the hand gesture 131.

. According to one embodiment, the virtual reality device 110 (e.g., the processor 250) may request and receive application information for the selected home appliance (S820). The virtual reality device 110 (e.g., the processor 250) may request the application information for the selected home appliance from a server (not shown) through the communication unit 240 and receive the application information for the selected home appliance from the server (not shown) through the communication unit 240.

. According to one embodiment, the virtual reality device 110 (e.g., the processor 250) may classify the functions of the received application information by category (S822). The virtual reality device 110 (e.g., the processor 250) may classify the functions according to the category of the home appliance by analyzing the application information for the home appliance received from the server (not shown). For example, the virtual reality device 110 may classify functions of a home appliance (e.g., an air conditioner) by category (e.g., temperature control, humidity control, dehumidification control, airflow direction control, airflow speed control, and timer setting), and may classify functions corresponding to each category (e.g., in a case where the category is temperature control, natural wind, sleep wind, low, medium, and high). Such categories or functions may vary depending on a type or model of the home appliance.

. According to one embodiment, the virtual reality device 110 (e.g., the processor 250) may assign an identifier to each function classified by category and store the identifier (S824). The virtual reality device 110 (e.g., the processor 250) may assign an identifier to each function by category of the home appliance, match the identifiers with the functions, and store the identifiers in the memory 210. The virtual reality device 110 may generate a tree structure based on the categories and functions of the home appliances, assign a unique identifier to each category and each function included in the generated tree structure, and store the identifiers in the memory 210.

. Through this tree structure, when one category is selected, the functions corresponding to the selected category may be selected.

. According to one embodiment, the virtual reality device 110 (e.g., the processor 250) may register or install an application for a home appliance in an application for a virtual reality device (S826). The virtual reality device 110 (e.g., the processor 250) may register (or install) the application for the home appliance received in operation S820 to the application (e.g., a ThinQ application) for the virtual reality device 110.

. For example, when the virtual reality device 110 is executed in a state in which the application for the home appliance is registered in the application (e.g., a ThinQ application) for the virtual reality device 110, the virtual reality device 110 (e.g., the processor 250) may include the application for the home appliance registered in the home screen and display the application on the display unit 220.

. Referring to FIG. 10A, the virtual reality device 110 may register an application for a home appliance from a different manufacturer in the application (e.g., an LG ThinQ application) for the virtual reality device 110. For example, the virtual reality device 110 may register home appliances manufactured by different manufacturers (e.g., Samsung, Carrier) in addition to the home appliances manufactured by LG Electronics. In this case, applications for home appliances manufactured by other manufacturers (e.g., Samsung, Carrier) may or may not be present, and the present disclosure describes cases in which the applications for the home appliances manufactured by the other manufacturers (e.g., Samsung, Carrier) are separately present.

. According to one embodiment, the application (e.g., an LG ThinQ application) for the virtual reality device 110 (e.g., the processor 250) may include and display an application 1011 for a registered home appliance (e.g., a Carrier air conditioner) on a screen 1010. The screen 910 may include a search menu 1011 for receiving information (e.g., product name, model name) on a home appliance to be registered.

. According to one embodiment, the virtual reality device 110 (e.g., the processor 250) may determine whether the application 1011 for the home appliance (e.g., a Carrier air conditioner) is selected through the controller 260 for controlling the operation of the virtual reality device 110, the eye tracking, or the hand icon 421 moving on the screen based on the hand gesture 131 of the user 130 wearing the virtual reality device 110.

. According to one embodiment, when the application 1011 is selected, the virtual reality device 110 (e.g., the processor 250 may display the screen 1020 for controlling the operation of the home appliance (e.g., a Carrier air conditioner). To this end, the virtual reality device 110 (e.g., the processor 250) may switch the screen to operate an application for a home appliance (e.g., a Carrier air conditioner) on the virtual reality device 110 using a virtual reality mode. For example, the virtual reality device 110 (e.g., the processor 250) may classify the functions of the switch the received home appliance (e.g., a Carrier air conditioner) by category, assign an identifier to each function for each classified category, and store the identifiers in the memory 210.

. The virtual reality device 110 (e.g., the processor 250) may configure and display a screen 1020 to be displayed on the virtual reality device 110 based on the identifiers assigned to these categories and functions.

. For example, the screen 1020 may include information on icons for categories (e.g., heating 1021, cooling 1022, dehumidification 1023, air purification 1024) provided by the home appliance (e.g., a Carrier air conditioner), a current temperature 1025, and intensity control 1026.

. According to one embodiment, the virtual reality device 110 (e.g., the processor 250) may identify a command to control at least one of the selection of the categories (e.g., the heating 1021, the cooling 1022, the dehumidification 1023, the air purification 1024), the current temperature control 1025, and the intensity control 1026 by the controller 260, the eye tracking, or the hand icon 421 moving on the screen based on the hand gesture 131.

. According to one embodiment, the virtual reality device 110 (e.g., the processor 250) may include and display an application 1027 for the home appliance (e.g., a Carrier air conditioner) at the bottom of the screen 1020.

. FIG. 11 is a flowchart showing a process in which the virtual reality device according to one embodiment of the present disclosure receives and installs an application for a home appliance through an image of the home appliance. FIG. 12A is an exemplary view showing a state in which a user wearing the virtual reality device according to one embodiment of the present disclosure instructs the registration of a home appliance. FIG. 12B is an exemplary view showing a state in which the virtual reality device according to one embodiment of the present disclosure is scanning the home appliance. FIG. 12C is an exemplary view showing a state in which the virtual reality device according to one embodiment of the present disclosure has identified the home appliance.

. Hereinafter, a process in which the virtual reality device according to one embodiment of the present disclosure receives and installs an application for a home appliance through an image of the home appliance will be described in detail with reference to FIGS. 11, 12A, 12B, and 12C as follows.

. According to one embodiment, the virtual reality device 110 (e.g., the processor 250) may identify whether a command to register a home appliance in an application for the virtual reality device is input (S1110). The virtual reality device 110 (e.g., the processor 250) may identify whether a command to register at least one home appliance not installed in the virtual reality device 110 in the application for the virtual reality device 110 is input. This command may be input through the controller 260, the hand icon 421, or the voice input from the user wearing the virtual reality device 110.

. According to one embodiment, the virtual reality device 110 (e.g., the processor 250) may activate the camera of the virtual reality device (S1112). The virtual reality device 110 (e.g., the processor 250) may activate the camera 230 by the user's command when the home appliance to be controlled is not registered in the application (e.g., an LG ThinQ application) for the virtual reality device 110. This command may be input through the controller 260, the hand icon 421, or the voice input from the user wearing the virtual reality device 110.

. According to one embodiment, the virtual reality device 110 (e.g., the processor 250) may display and analyze an image acquired through the camera in real time (S1114). The virtual reality device 110 (e.g., the processor 250) may acquire at least one image of the home appliance to be registered through the activated camera 230. The home appliance may be installed within the home but may not be registered in the application (e.g., ThinQ application) for the virtual reality device 110.

. The virtual reality device 110 (e.g., the processor 250) may analyze objects within the image (e.g., the appearance of a home appliance) in real time by applying an image outline extraction algorithm (e.g., corner detection, Harris corner detection) to at least one acquired image.

. For example, the virtual reality device 110 (e.g., the processor 250) may extract feature points of the home appliance included in the acquired image and identify the appearance of the home appliance corresponding to the outline formed by the extracted feature points, thereby analyzing the product name, model name, and the like of the home appliance in real time.

. Alternatively, the virtual reality device 110 (e.g., the processor 250) may acquire an image of a QR code or barcode attached to the appearance of the home appliance through the camera 230.

. In addition, the virtual reality device 110 (e.g., the processor 250) may operate in a pass-through mode to allow the user 130 wearing the virtual reality device 110 to view the home appliance.

. Referring to FIGS. 12A and 12B, the virtual reality device 110 may acquire a voice 1202 spoken by the user 130 wearing the virtual reality device 110 through a microphone 270. For example, the user 130 may activate the camera 230 through voice command to register a home appliance that is not registered in the application (e.g., an LG ThinQ application) for the virtual reality device 110.

. According to one embodiment, the virtual reality device 110 (e.g., the processor 250) may activate the camera 230 when a keyword (e.g., application installation, home appliance registration, camera activation) that activates the camera 230 is recognized.

. Alternatively, the virtual reality device 110 (e.g., the processor 250) may activate the camera 230 when input from a button (e.g., a button for activating the camera 230) formed on the appearance of the virtual reality device 110 is detected.

. According to one embodiment, the virtual reality device 110 (e.g., the processor 250) may operate in the pass-through mode when a keyword (e.g., application installation, home appliance registration, camera activation) is recognized. The pass-through mode is a function that allows the user 130 wearing the virtual reality device 110 to view a real-world scene in front of the user.

. According to one embodiment, the virtual reality device 110 (e.g., the processor 250) may identify a home appliance (e.g., an air conditioner 1210) through the activated camera 230 and/or pass-through mode.

. When the home appliance (e.g., the air conditioner 1210) is identified, the virtual reality device 110 (e.g., the processor 250) may output a guidance voice 1212 through the speaker 280. This guidance voice is intended to cause the user 130 to temporarily stop rotating the virtual reality device 110 to increase a recognition rate of the home appliance (e.g., the air conditioner 1210).

. For example, when the home appliance (e.g., the air conditioner 1210) is recognized, the virtual reality device 110 (e.g., the processor 250) may display a boundary line 1211 on the appearance of the recognized home appliance (e.g., the air conditioner 1210).

. According to one embodiment, the virtual reality device 110 (e.g., the processor 250) may identify the type and model name of an unregistered home appliance through image matching when an unregistered home appliance is present within an image (S1116, S1118). The virtual reality device 110 (e.g., the processor 250) may identify the type and model name of a home appliance through the image outline extraction algorithm on at least one acquired image.

. Alternatively, the virtual reality device 110 (e.g., the processor 250) may identify the type and model name of the home appliance included in the image by matching information on the appearance of the home appliance included in at least one acquired image with information on the appearance of each of the plurality of home appliances stored in the memory 210.

. When there is no information on the home appliance that matches the appearance of the home appliance in the memory 210, the virtual reality device 110 (e.g., the processor 250) may request information on a home appliance that matches the appearance of the home appliance from the portable terminal 120 to identify the type and model name of the home appliance.

. Referring to FIG. 12C, when the type and model name of the home appliance are identified through the matching result, the virtual reality device 110 (e.g., the processor 250) may output the identification result as a voice message 1222 through the speaker 280.

. According to one embodiment, the virtual reality device 110 (e.g., the processor 250) may request and receive application information for the identified home appliance (S1120). The virtual reality device 110 (e.g., the processor 250) may request the application information for the identified home appliance from a server (not shown) through the communication unit 240 and receive the application information for the selected home appliance from the server (not shown) through the communication unit 240.

. Alternatively, the virtual reality device 110 (e.g., the processor 250) may request the application information for the identified home appliance from the portable terminal 120 through the communication unit 240 and acquire the application information for the home appliance from the portable terminal 120 through the communication unit 240.

. According to one embodiment, the virtual reality device 110 (e.g., the processor 250) may classify the functions of the received application information by category (S1122). The virtual reality device 110 (e.g., the processor 250) may classify the functions according to the category of the home appliance by analyzing the application information for the received home appliance. For example, the virtual reality device 110 may classify functions of a home appliance (e.g., an air conditioner) by category (e.g., temperature control, humidity control, dehumidification control, airflow direction control, airflow speed control, and timer setting), and may classify functions corresponding to each category (e.g., in a case where the category is temperature control, natural wind, sleep wind, low, medium, and high). Such categories or functions may vary depending on a type or model of the home appliance.

. According to one embodiment, the virtual reality device 110 (e.g., the processor 250) may assign an identifier to each function classified by category and store the identifier (S1124). The virtual reality device 110 (e.g., the processor 250) may assign an identifier to each function by category of the home appliance, match the identifiers with the functions, and store the identifiers in the memory 210. The virtual reality device 110 may generate a tree structure based on the categories and functions of the home appliances, assign a unique identifier to each category and each function included in the generated tree structure, and store the identifiers in the memory 210.

. Through this tree structure, when one category is selected, the functions corresponding to the selected category may be selected.

. According to one embodiment, the virtual reality device 110 (e.g., the processor 250) may register or install an application for a home appliance in an application for a virtual reality device (S1126). The virtual reality device 110 (e.g., the processor 250) may register (or install) the application for the home appliance received in operation S1120 in the application (e.g., a ThinQ application) for the virtual reality device 110.

. For example, when the virtual reality device 110 is executed in a state in which the application for the home appliance is registered in the application (e.g., a ThinQ application) for the virtual reality device 110, the virtual reality device 110 (e.g., the processor 250) may include the application for the home appliance registered in the home screen and display the application on the display unit 220.

. FIG. 13 is a flowchart showing a process of controlling operation of a home appliance using the virtual reality device according to one embodiment of the present disclosure.

. Hereinafter, a process of controlling operation of a home appliance using the virtual reality device according to one embodiment of the present disclosure will be described in detail with reference to FIG. 13 as follows.

. According to one embodiment, the virtual reality device 110 (e.g., the processor 250) may identify whether an alarm has occurred in the home appliance or whether a situation requiring operation of the home appliance has occurred (S1310). The virtual reality device 110 (e.g., the processor 250) may receive a signal related to an event (e.g., alarm occurrence, warning occurrence) occurring in at least one home appliance through pairing, and determine whether a situation requiring control of the home appliance (e.g., user operation) occurs.

. For example, the virtual reality device 110 (e.g., the processor 250) receives information on the operation of the home appliance in operation based on pairing, and then stores the information in the memory 210. In addition, the virtual reality device 110 (e.g., the processor 250) may determine whether a situation requiring operation of the home appliance has occurred through information on the operation of the home appliance.

. According to one embodiment, the virtual reality device 110 (e.g., the processor 250) may identify whether the virtual reality device is in use (S1312). The virtual reality device 110 (e.g., the processor 250) may determine whether the virtual reality device 110 is currently being worn by the user 130 (e.g., when an image is currently playing).

. According to one embodiment, when the virtual reality device is not in use, the user 130 directly operates the home appliance or operates the home appliance through the application for the portable terminal 120 (S1314). When the virtual reality device is not in use, the user may directly operate the home appliance after listening to the warning sound generated by the home appliance. Alternatively, when the virtual reality device is not in use, the user 130 may control the home appliance through the portable terminal 120.

. According to one embodiment, the virtual reality device 110 (e.g., the processor 250) may identify whether the home appliance is registered in the application when the virtual reality device is in use (S1316). The virtual reality device 110 (e.g., the processor 250) may determine whether the home appliance is registered in the application (e.g., an LG ThinQ application) for the virtual reality device 110 when an event (e.g., alarm, warning) occurs in the home appliance.

. For example, the virtual reality device 110 (e.g., the processor 250) may determine whether the application (e.g., an LG ThinQ application) for the virtual reality device 110 includes an application for controlling operation of a home appliance.

. According to one embodiment, when the application for the home appliance is registered in the application, the virtual reality device 110 (e.g., the processor 250) may convert the application for the home appliance into a version suitable for the virtual reality device and display the converted application (S1318). When the application for the home appliance is registered in the application (e.g., an LG ThinQ application) for the virtual reality device 110, the virtual reality device 110 (e.g., the processor 250) may convert the screen of the application for the home appliance into a screen suitable for the virtual reality device based on a tree structure and display the converted screen.

. According to one embodiment, the virtual reality device 110 (e.g., the processor 250) may generate control logic corresponding to a command input through the displayed screen and then transmit the control logic to the corresponding home appliance (S1320). The virtual reality device 110 (e.g., the processor 250) may generate control logic corresponding to a command using the controller 260 and the hand icon 421 by the hand gesture 131 on the displayed screen and then transmit the generated control logic to the corresponding home appliance.

. According to one embodiment, when the home appliance is not registered in the application, the virtual reality device 110 (e.g., the processor 250) may identify whether it is the home appliance to be first connected (S1322). When a home appliance in which the event has occurred is not registered in the application (e.g., an LG ThinQ application), the virtual reality device 110 (e.g., the processor 250) may determine whether the home appliance is the home appliance to be first connected to the virtual reality device 110.

. According to one embodiment, when the home appliance is the home appliance to be first connected, the virtual reality device 110 (e.g., the processor 250) may identify whether information on the home appliance to be connected is present (S1324). The virtual reality device 110 (e.g., the processor 250) may determine whether the information (e.g., model name, product name) on the home appliance to be first connected is stored in the memory 210.

. According to one embodiment, when the information on the home appliance to be connected is not present, the virtual reality device 110 (e.g., the processor 250) may scan the appearance of the home appliance through the camera of the virtual reality device (S1326). When the information (e.g., model name, product name) on the home appliance to be first connected is not stored in the memory 210, the virtual reality device 110 (e.g., the processor 250) may automatically activate the camera 230 to acquire at least one image of the appearance of the home appliance in which the event occurred. In addition, the virtual reality device 110 (e.g., the processor 250) may analyze the appearance of the home appliance by applying the image outline extraction algorithm to the acquired image.

. According to one embodiment, the virtual reality device 110 (e.g., the processor 250) may acquire information on the home appliance through big data related to the appearance of the scanned home appliance (S1328). The virtual reality device 110 (e.g., the processor 250) may acquire information on the home appliance through the big data related to the analyzed appearance of the home appliance, or acquire information on the home appliance by transmitting information on the appearance of the home appliance to the portable terminal 120 or the server (not shown).

. According to one embodiment, the virtual reality device 110 (e.g., the processor 250) may identify whether an application for a home appliance is present on a portable terminal based on the acquired information on the home appliance (S1330). When the information on the home appliance is acquired, the virtual reality device 110 (e.g., the processor 250) may identify whether application information for the home appliance is present on the portable terminal 120 based on pairing with the portable terminal 120.

. According to one embodiment, when there is no application for the home appliance on the portable terminal, the user 130 directly operates the corresponding home appliance (S1332). When there is no application information for the home appliance on the portable terminal 120, the virtual reality device 110 (e.g., the processor 250) may display a message indicating that there is no application information for the home appliance on the portable terminal 120, or output an alarm.

. According to one embodiment, when the application for the home appliance is present on the portable terminal, the virtual reality device 110 (e.g., the processor 250) may identify whether the information on the home appliance acquired in operation S1328 matches the information on the home appliance included in the application (e.g., an LG ThinQ application) for the portable terminal 120 (S1334). When the application information for the home appliance is present in the application (e.g., an LG ThinQ application) for the portable terminal 120, the virtual reality device 110 (e.g., the processor 250) may identify whether the acquired information on the home appliance matches the information on the home appliance included in the application(e.g., an LG ThinQ application) for the portable terminal 120.

. According to one embodiment, when the information on the home appliance acquired in operation S1328 does not match the information on the home appliance included in the application, the user 130 manually downloads and executes the application (S1336). When the acquired information on the home appliance does not match the information on the home appliance included in the application, the virtual reality device 110 (e.g., the processor 250) may display a notification message or generate a warning sound to make the user aware to manually download the application.

. According to one embodiment, when the information on the home appliance acquired in operation S1328 matches the information on the home appliance included in the application, the virtual reality device 110 (e.g., the processor 250) may download the application for the corresponding home appliance through the portable terminal 120 (S1338). When the acquired information on the home appliance matches the information on the home appliance included in the application, the virtual reality device 110 (e.g., the processor 250) may request and receive the application information for the home appliance from the portable terminal 120.

. According to one embodiment, the virtual reality device 110 (e.g., the processor 250) may identify whether an application is executed (S1340). After the application (e.g., an LG ThinQ application) is executed, when the command to control the home appliance is input through the executed application, the virtual reality device 110 (e.g., the processor 250) may generate control logic corresponding to the input command and then transmit the control logic to the home appliance.

. As described above, the virtual reality device 110 (e.g., the processor 250) according to the present disclosure may request a list of home appliances from the portable terminal 120 and display the list, and by requesting an application for a home appliance selected from the displayed list from the portable terminal 120 or a server (not shown), the virtual reality device 110 (e.g., the processor 250) may install an application for controlling the operation of at least one home appliance within the home.

. FIG. 14 is a flowchart showing a process of controlling the operation of the home appliance through the virtual reality device according to one embodiment of the present disclosure. FIG. 15 is an exemplary view showing applications for each of a plurality of home appliances through the virtual reality device according to one embodiment of the present disclosure. FIG. 16 is an exemplary view showing a state in which the virtual reality device according to one embodiment of the present disclosure has switched the screen of the portable terminal to the virtual reality mode and displayed the switched screen.

. Hereinafter, a process of controlling operation of a home appliance through the virtual reality device according to one embodiment of the present disclosure will be described in detail with reference to FIGS. 14, 15, and 16 as follows.

. According to one embodiment, the virtual reality device 110 may display an application for each of a plurality of home appliances (S1410). The virtual reality device 110 (e.g., the processor 250) may display the application for each of the plurality of home appliances (e.g., air conditioner, washing machine, refrigerator) received from the portable terminal 120 through the display unit 220.

. According to one embodiment, the virtual reality device 110 may identify whether an application for any one of the home appliances among the plurality of applications is selected (S1412). The virtual reality device 110 (e.g., the processor 250) may identify which application for a home appliance is selected through the controller 260 connected to the virtual reality device 110 in a wired or wireless manner.

. Referring to FIG. 15, the virtual reality device 110 may output a screen 1510 including applications for controlling operation of each of a plurality of home appliances through the display unit 220.

. For example, the screen 1510 may include an application 1511 for controlling operation of a washing machine, an application 1512 for controlling operation of an air conditioner, an application 1513 for controlling operation of an oven, an application 1514 for controlling operation of a dishwasher, an application 1515 for controlling operation of a water purifier, etc.

. According to one embodiment, the user 130 wearing the virtual reality device 110 may select the application 1512 for controlling the home appliance (e.g., an air conditioner) within the home through the hand icon 421 based on the movement of the hand gesture 131, or may select the application 1515 for controlling the home appliance (e.g., a water purifier) through the controller 260.

. The virtual reality device 110 may detect input using the hand icon 421 based on the hand gesture 131 or the controller 260.

. For example, the virtual reality device 110 may determine which application is selected by identifying a direction or a position corresponding to the hand gesture 131 in real time through the camera 230, or may determine which application is selected by identifying a position of a pointer 1516 of the controller 260 in real time.

. According to one embodiment, the virtual reality device 110 may acquire stored identifiers related to the functions of the selected home appliance (S1414). When the application for controlling the home appliance is selected, the virtual reality device 110 (e.g., the processor 250) may acquire identifiers corresponding to the selected application from the memory 210.

. For example, when the application 1512 related to an air conditioner is selected, the virtual reality device 110 (e.g., the processor 250) may acquire identifiers related to the category-specific functions corresponding to the selected application 1512 from the memory 210.

. According to one embodiment, the virtual reality device 110 may generate a tree structure of functions of the home appliance based on the acquired identifiers (S1416). The virtual reality device 110 (e.g., the processor 250) may generate a tree structure using the acquired identifiers by category. For example, the virtual reality device 110 may classify, in the tree structure through identifiers, functions according to categories provided by an air conditioner (e.g., airflow speed control) (e.g., natural wind, sleep wind, low, medium, and high).

. According to one embodiment, the virtual reality device 110 may identify whether a menu of the application is selected (S1418). The virtual reality device 110 (e.g., the processor 250) may detect an input selecting a category of the corresponding home appliance using the hand icon 421 or the controller 260 in the application.

. For example, the virtual reality device 110 (e.g., the processor 250) may execute the application 1512 of the home appliance (e.g., an air conditioner) and determine whether the category (e.g., wind speed control) of the home appliance (e.g., an air conditioner) provided in the executed application 1512 is selected.

. According to one embodiment, the virtual reality device 110 may configure and display a screen including information on the corresponding functions based on the tree structure of the selected menu (S1420). For example, when a category (e.g., airflow speed control) is selected in the application 1512 of the home appliance (e.g., an air conditioner), the virtual reality device 110 (e.g., the processor 250) may configure and display a screen including information on functions corresponding to the selected category (e.g., natural wind, sleep wind, low, medium, and high). Such a screen may be formed with multiple layouts, such as a screen displayed on a portable terminal.

. For example, the virtual reality device 110 may configure, as a three-dimensional screen, and display a screen including information on functions corresponding to a selected category (e.g., airflow speed control) (e.g., natural wind, sleep wind, low, medium, and high).

. Referring to FIG. 16, the virtual reality device 110 (e.g., the processor 250) may display a screen 1610 that shows the functions of the home appliance (e.g., an air conditioner) in the application 1512 for the home appliance (e.g., an air conditioner). For example, the screen 1610 may include at least one of an operation mode (e.g., cool 1611, dry 1612, fan 1613, auto 1614, a fan speed (e.g., low 1615, medium 1616, high 1617, auto 1618), a vane swing control 1619, or a swing direction 1620.

. The types and number of functions displayed on the screen 1610 may differ from the types and number of functions included in the screen 1630 displayed on the portable terminal 120.

. In this way, since the screen size that may be displayed on the portable terminal 120 is small, precision is required when operating the home appliance, and in contrast, the virtual reality device 110 may display the screen 1610 with newly configured functions provided by the application 1512 of the portable terminal 120 so that the user 130 wearing the virtual reality device 110 may view the screen, thereby allowing the user to remotely control the home appliance (e.g., an air conditioner) much more easily and conveniently than using the portable terminal 120.

. According to one embodiment, the virtual reality device 110 may identify whether a command to control a function is input on the displayed screen (S1422). The virtual reality device 110 (e.g., the processor 250) may identify whether a command to control a category or function of the selected home appliance is input by the hand icon 421 or the controller 260 on the displayed screen (i.e., a screen viewed by the user wearing the virtual reality device 110).

. According to one embodiment, the virtual reality device 110 may generate control logic corresponding to the input command (S1424). The virtual reality device 110 (e.g., the processor 250) may generate control logic including commands that cause the corresponding home appliance to operate by a function controlled (or selected) by the hand gesture 131, the eye tracking, or the controller 260.

. According to one embodiment, the virtual reality device 110 may transmit the identifier and control logic to the corresponding home appliance (S1426). The virtual reality device 110 (e.g., the processor 250) may transmit the generated control logic directly to the corresponding home appliance through the communication unit 240 or to the corresponding home appliance through a router (not shown) disposed within the home. Alternatively, the virtual reality device 110 (e.g., the processor 250) may transmit the generated control logic to the corresponding home appliance through the portable terminal 120.

. According to one embodiment, a home appliance 1410 may transmit a response to the reception of the control logic to the virtual reality device 110 (S1428). The home appliance 1410 may transmit the response to the reception of the control logic to the virtual reality device 110, and the virtual reality device 110 (e.g., the processor 250) may acquire the response transmitted by the home appliance through the communication unit 240.

. According to one embodiment, the home appliance 1410 operates based on the control logic (S1430). The home appliance 1410 may perform functions controlled (or selected) by the hand gesture 131, the eye tracking, or the controller 260 based on the control logic.

. FIG. 17 is a flowchart showing a process in which the virtual reality device according to one embodiment of the present disclosure controls operation of at least one home appliance. FIG. 18 is an exemplary view showing a state in which the virtual reality device according to one embodiment of the present disclosure is displaying an operation screen. FIG. 19 is an exemplary view showing a state in which the virtual reality device according to one embodiment of the present disclosure pauses a currently displayed operation screen and displays information on a received event. FIG. 20 is an exemplary view showing a state in which the virtual reality device according to one embodiment of the present disclosure displays contact information of members. FIG. 21 is an exemplary view showing a process in which a user wearing the virtual reality device according to one embodiment of the present disclosure controls operation of a home appliance through a hand gesture.

. Hereinafter, a process of controlling operation of a home appliance through the virtual reality device according to one embodiment of the present disclosure will be described in detail with reference to FIGS. 17, 18, 19, 20, and 21 as follows.

. According to one embodiment, the virtual reality device 110 (e.g., the memory 210) may store the contact information of members (S1710). The virtual reality device 110 (e.g., the memory 210) may store the contact information stored in the portable terminal 120. Alternatively, the virtual reality device 110 (e.g., the memory 210) may store the contact information (e.g., phone number, email) of each member registered as a family.

. According to one embodiment, the virtual reality device 110 (e.g., the processor 250) may identify whether a command for pairing with the home appliance 1410 is input (S1712). The virtual reality device 110 (e.g., the processor 250) may detect a command (e.g., a command for pairing with the home appliance 1410) by the input by the controller 260, the eye tracking and/or the hand icon based on the movement of the hand gesture 131 of the user wearing the virtual reality device 110.

. According to one embodiment, the virtual reality device 110 (e.g., the processor 250) may request the pairing with the home appliance 1410 (S1714). When receiving the command, the virtual reality device 110 (e.g., the processor 250) may request pairing with the portable terminal 120 by activating short-range communication (e.g., Wi-Fi, Bluetooth, NFC, or Beacon). Alternatively, the virtual reality device 110 may request the pairing with the portable terminal 120 through a router (not shown).

. This request is intended to control the operation of the home appliance 1410 remotely using the virtual reality device 110. For example, when this request is transmitted to the home appliance 1410 and pairing is established, the user 130 wearing the virtual reality device 110 may remotely control the home appliance 1410 based on the event generated by the home appliance 1410. For example, the home appliance 1410 may include a home appliance that requires control of a heat source (e.g., an induction cooker, a gas range, a microwave oven, an oven), or a home appliance that does not require control of the heat source (e.g., an air conditioner, an air purifier, a robot vacuum cleaner).

. According to one embodiment, the home appliance 1410 may transmit a response to a pairing request to the virtual reality device (S1716). The home appliance 1410 may respond (e.g., approve or disapprove) to the pairing request received from the virtual reality device 110.

. According to one embodiment, a communication channel may be established between the virtual reality device 110 and the home appliance 1410 (S1718). When receiving a response (e.g., an approval) from the portable terminal 1410, the virtual reality device 110 (e.g., the processor 250) may establish a wired or wireless channel (e.g., Wi-Fi, Bluetooth, NFC, or Beacon) with the portable terminal 120 through the communication unit 240. For example, the virtual reality device 110 may establish a direct communication channel with the home appliance 1410 through a wireless channel, or may establish an indirect communication channel with the home appliance 1410 through a router (not shown).

. These communication channels may be maintained while the operation of the home appliance 1410 is controlled by the virtual reality device 110 (or while the home appliance 1410 is in operation). That is, the virtual reality device 110 may transmit a command input through the application for the home appliance 1410 to the home appliance 1410 in real time while the home appliance 1410 is operating.

. According to one embodiment, the home appliance 1410 may acquire information indicating the current operating state (S1720). The home appliance 1410 may identify the current status indicating that it is operating according to the configured operation logic. For example, when the oven is currently preheating, the oven may identify this.

. According to one embodiment, the home appliance 1410 may transmit the acquired state information to the virtual reality device 110 (S1722). After acquiring the state information, the home appliance 1410 may transmit the acquired state information to the virtual reality device 110 through a communication channel configured based on pairing. Such state information may be transmitted periodically or in real time.

. According to one embodiment, the virtual reality device 110 (e.g., the processor 250) may display the state information of the home appliance (S1724). When receiving the state information, the virtual reality device 110 (e.g., the processor 250) may switch the received state information to the virtual reality mode and then display the switched state information through the display unit 220.

. Alternatively, the virtual reality device 110 (e.g., the processor 250) may display the received state information through the display unit 220 without conversion into the virtual reality mode.

. Referring to FIG. 18, the virtual reality device 110 (e.g., the processor 250) may display a screen 1810 of content (e.g., game, movie) currently being used by the user 130 through the display unit 220. The virtual reality device 110 (e.g., the processor 250) may include and display state information (e.g., preheating) of the home appliance 1410 (e.g., an oven) on the screen 1810.

. In FIG. 18, for convenience of description, the state information on a single home appliance (e.g., an oven) is shown, but the virtual reality device 110 (e.g., the processor 250) may also display a screen including state information on multiple home appliances currently operating within the home.

. In addition, the virtual reality device 110 (e.g., the processor 250) may acquire information on the state of the home appliance 1410 in real time based on pairing with the home appliance 1410 (e.g., an oven) and display the acquired state information in real time.

. According to one embodiment, the virtual reality device 1410 may identify whether a menu of the application is selected (S1726). The home appliance 1410 may periodically monitor the home appliance 1410 to identify in real time events (e.g., situations requiring urgent action by the user) occurring in the home appliance 1410.

. These events may include, for example, a case in which broth overflows from a cooking appliance when the home appliance 1410 is an induction cooker.

. In addition, the event may include a case in which a gas range is turned off due to an overflow of broth from the cooking appliance when the appliance 1410 is the gas range.

. According to one embodiment, the appliance 1410 may transmit information on the event (S1728). The appliance 1410 may transmit information on the occurred event to the virtual reality device 110 in real time through the communication channel based on the pairing with the virtual reality device 110.

. According to one embodiment, the virtual reality device 110 (e.g., the processor 250) may display information on the event (S1730). When receiving the information on the event, the virtual reality device 110 (e.g., processor 250) may switch the information on the event to the virtual reality mode and then display the switched information through the display unit 220.

. Alternatively, the virtual reality device 110 (e.g., the processor 250) may display the received information on the event through the display unit 220 without conversion into the virtual reality mode.

. Referring to FIG. 19, while a screen 1810 is being displayed (e.g., while the user 130 is using the virtual reality device 110), when receiving information on an event (e.g., overheating) from the home appliance 1410 (e.g., an oven), the virtual reality device 110 (e.g., the processor 250) may display information on the event 1911 on the screen 1810.

. For example, when receiving the information on the event (e.g., overheating), the virtual reality device 110 (e.g., the processor 250) may pause the currently displayed screen 1810 (1912) and display the information on the event 1911 on the screen 1810. Alternatively, the virtual reality device 110 (e.g., the processor 250) may display the information on the event 1911 on the screen 1810 without pausing the screen 1810.

. According to one embodiment, the virtual reality device 110 (e.g., the processor 250) may identify whether the contact information of a member within the home is present in the memory 210 (S1732). The virtual reality device 110 (e.g., the processor 250) may acquire the contact information (e.g., phone number, email) of each family member (e.g., family) within the home from the memory 210. These contact information may be used to transmit the information on the event occurring in the home appliance 1410 to the members within the home.

. According to one embodiment, the virtual reality device 110 (e.g., the processor 250) may display the contact information of a member and transmit information indicating the operation of the home appliance to the portable terminal of the selected member (S1734). The virtual reality device 110 (e.g., the processor 250) may pause the currently displayed operation screen and display the information on the event through the display unit 220. Alternatively, the virtual reality device 110 (e.g., the processor 250) may automatically transmit the information on the event to a member who has been automatically configured, without pausing the currently displayed operation screen.

. To this end, the virtual reality device 110 (e.g., the processor 250) may change the format of the message to match a channel between the virtual reality device 110 and the portable terminal so that information on the occurred event is transmitted through the portable terminal, and transmit the event information in the changed format to the corresponding portable terminal.

. Referring to FIG. 20, when receiving the information on the event, the virtual reality device 110 (e.g., the processor 250) may display a screen 2010 including contact information 2020 stored in the portable terminal 120, contact information 2030 of family members within the home, and the information on the event (e.g., overheating) 1911. The screen 2010 may be displayed above the screen 1810 of FIG. 19. Alternatively, the screen 2010 may be overlapped on the screen 1810 in a semi-transparent manner.

. For example, the screen 2010 may include the contact information 2020 stored in the portable terminal 120 and contact information (e.g., phone number, email) of not only family members 2021 and 2023 but also non-family members 2022.

. In addition, contact information 2030 of family members may include contact information (e.g., phone number, email) of members currently residing within the home.

. The user 130 wearing the virtual reality device 110 may select a member (e.g., 2723) through the controller 260, the eye tracking, or the hand icon 421 by the hand gesture 131. In addition, the virtual reality device 110 (e.g., the processor 250) may generate a message requesting the clearing of an event and transmit the generated message to a portable terminal of the member (e.g., 2723) who is in a position at which the event (e.g., overheating) currently occurring in the home appliance 1410 (e.g., an oven) may be cleared.

. According to one embodiment, the virtual reality device 110 (e.g., the processor 250) may pause the current operation screen of the virtual reality device 110 and display the control screen of the home appliance 1410 (S1736). The virtual reality device 110 (e.g., the processor 250) may pause the current screen (e.g., game screen, movie screen) in operation when the contact information of a member within the home is not present in the memory 210 or when no other member is present within the home.

. Then, the virtual reality device 110 (e.g., the processor 250) identifies the home appliance 1410 that transmits the information on the event, and then executes an application corresponding to the home appliance 1410. In addition, the virtual reality device 110 (e.g., the processor 250) may display a control screen for controlling the operation of the home appliance 1410 based on the occurred event.

. In this case, the virtual reality device 110 (e.g., the processor 250) may configure a control screen that receives a command for the event using identifiers stored in the memory 210 and assigned to the functions of the category, and then display the configured control screen through the display unit 220 of the home appliance 1410.

. According to one embodiment, the virtual reality device 110 (e.g., the processor 250) may identify whether a command to control functions is input on the displayed screen (S1738). The virtual reality device 110 (e.g., the processor 250) may identify a command input using the hand icon 421, the eye tracking, or the controller 260 on the application screen.

. For example, the virtual reality device 110 (e.g., the processor 250) may display a screen of an application 1523 of the home appliance 1410 (e.g., an oven) through the display unit 220 and identify whether a command is input through the displayed screen.

. According to one embodiment, the virtual reality device 110 (e.g., the processor 250) may generate control logic corresponding to the input command (S1740). The virtual reality device 110 (e.g., the processor 250) may generate control logic including commands that cause the home appliance to operate based on the command input by the hand gesture 131, the eye tracking, or the controller 260.

. Referring to FIG. 21, when there is no member within the home (or when the user 130 selects that no member is present within the home), the virtual reality device 110 (e.g., the processor 250) may execute the application 1523 for the home appliance 1410 (e.g., an oven) and then display a screen 2110 that receives a command to clear an event (e.g., overheating).

. For example, the screen 2110 may include information on a temperature control 1320 and intensity control 2130 set for the home appliance 1410 (e.g., an oven).

. The virtual reality device 110 (e.g., the processor 250) may receive a command for the temperature control 1320 set for the home appliance 1410 (e.g., an oven) and/or a command for the intensity control 21 (2130) of the home appliance 1410 (e.g., an oven) through the screen 2110.

. The virtual reality device 110 (e.g., the processor 250) may identify various commands input on the screen 2110 through the hand gesture 131 of the user 130 wearing the virtual reality device 110. For example, the user 130 may control the temperature set for the oven and control the heat intensity of the oven through the hand gesture 131.

. For example, the user 130 wearing the virtual reality device 110 may control a temperature set for the oven through a drag-and-drop operation of a temperature control icon 2111 based on the hand gesture 131.

. According to one embodiment, the virtual reality device 110 (e.g., the processor 250) may transmit commands related to identifiers and control logic to the home appliance 1410 (S1742). The virtual reality device 110 (e.g., the processor 250) may transmit the generated control logic directly to the home appliance through the communication unit 240 or to the home appliance through a router (not shown). Alternatively, the virtual reality device 110 (e.g., the processor 250) may transmit the generated control logic indirectly to the corresponding home appliance through the portable terminal 120.

. Then, when receiving the control logic, the home appliance may transmit a response indicating that it is capable of operating based on the control logic to the virtual reality device 110, and the virtual reality device 110 may display the response through the screen of the application 1523.

. According to one embodiment, the home appliance 1410 may operate based on the received control logic (S1744). The home appliance 1410 may operate according to the control logic and clear the generated event.

. Then, the home appliance 1410 may transmit information on the operation result to the virtual reality device 110, and the virtual reality device 110 (e.g., the processor 250) may display the operation result through the display unit 220. Alternatively, the virtual reality device 110 (e.g., the processor 250) may switch the information on the operation result to the virtual reality mode and display the switched information through the display unit 220.

. FIG. 22 is a flowchart showing a process of controlling the operation of the home appliance through the virtual reality device according to one embodiment of the present disclosure.

. Hereinafter, a process of controlling operation of a home appliance using the virtual reality device according to one embodiment of the present disclosure will be described in detail with reference to FIG. 22 as follows.

. Fire home appliances to be described below may include an oven, an induction cooker, a gas range, etc.

. According to one embodiment, when receiving the information on the occurrence of an event from the home appliance, the virtual reality device 110 may identify whether the home appliance is a home appliance that requires fire-control by analyzing the identifier of the home appliance included in the received event occurrence information (S2210). The virtual reality device 110 may analyze an identifier of a home appliance to identify whether the home appliance that has transmitted information on an occurrence of an event is a home appliance requiring fire-control (e.g., an oven, an induction cooktop, a gas range), a home appliance not requiring fire-control but requiring attention to surroundings (e.g., door opening) (e.g., a washing machine, a dryer, a styler), or a home appliance requiring relatively less fire-control and attention (e.g., a humidifier, a dehumidifier).

. According to one embodiment, the virtual reality device 110 may output that the home appliance is a fire-control device (S2212). The virtual reality device 110 may analyze the identifier of the home appliance included in the information on the occurrence of the event, and when the home appliance is identified as a home appliance requiring fire-control (e.g., an oven, an induction cooker, a gas range), the virtual reality device 110 may output that an event has occurred in the fire-control device on the screen 1810 of the content currently in use (e.g., a game, a movie).

. According to one embodiment, the virtual reality device 110 may identify whether a command to control the operation of the fire-control device is input from the user 130 using the virtual reality device 110 (S2214). For example, the user 130 determines whether to directly control the home appliance in which the event has occurred using the virtual reality device 110, to transmit a message requiring the clearing of the event to a family member 1223 to control the home appliance, or to pause the content currently in use (e.g., a game, a movie) and manually control the home appliance directly.

. The virtual reality device 110 may identify which one of selection menus displayed on the screen 1810 for content (e.g., a game, a movie) currently being used is selected based on the controller 260, the eye tracking, or the hand icon 421.

. According to one embodiment, the virtual reality device 110 may proceed to a pause or rest mode (S2216). When a menu (e.g., manual control) that does not control the operation of the fire-control device using the virtual reality device 110 is selected, the virtual reality device 110 may pause the screen 1810 for content (e.g., a game, a movie) currently being used or application for the virtual reality device 110 to the rest mode.

. According to one embodiment, the user 130 may manually operate the fire-control device (S2218). The user 130 removes the virtual reality device 110 and manually operates the fire-control device.

. According to one embodiment, the virtual reality device 110 may identify whether members other than the user are present within the home (S2220). When a menu to clear the event of the fire-control device (e.g., sending a message to a member) is selected by another member, the virtual reality device 110 may acquire the contact information (e.g., phone number, email) for each family member (e.g., family) within the home from the memory 210.

. According to one embodiment, the virtual reality device 110 may request control of the fire-control device from the portable terminal of another member within the home using an application (e.g., an LG ThinQ application) installed on the virtual reality device 110 (S2222). The virtual reality device 110 may display the contact information of other members within the home, and when at least one member among the displayed members is selected, the virtual reality device 110 may transmit a message requesting the clearing of the event to the portable terminal of the selected member.

. According to one embodiment, the content of the message may vary depending on the type of home appliance. For example, when the fire-control device is an oven, the message may include a guidance message such as "Please reduce the heating level of the oven."

. According to one embodiment, the operation of the fire-control device is controlled based on the command of another member (S2224). The member 2023 receiving the message manually controls the operation of the fire-control device (e.g., reducing the heating level).

. According to one embodiment, the fire-control device may transmit information based on the control result to the virtual reality device 110 (S2226). The fire-control device may transmit information indicating the result of the heating level being controlled to the virtual reality device 110 in real time based on pairing.

. According to one embodiment, the virtual reality device 110 may display the control result received from the fire-control device (S2228). The virtual reality device 110 may display the control result on the paused screen. In addition, after displaying the control result, the virtual reality device 110 may play paused content (e.g., a game, a movie).

. According to one embodiment, when the home appliance that has transmitted the information on the occurrence of the event in operation S2210 is not a fire-control device, the virtual reality device 110 may identify whether the home appliance is currently operating (S2230). The virtual reality device 110 may determine whether the home appliance is currently operating by analyzing the information on the occurrence of the event. For example, the information may include information indicating whether the home appliance is operating.

. According to one embodiment, when identifying that the home appliance is currently operating, the virtual reality device 110 may operate the home appliance in the same way as a non-fire-control device (S2232). When identifying that the home appliance is currently operating, the virtual reality device 110 may operate the home appliance by controlling the operation of the home appliance using the virtual reality device 110.

. According to one embodiment, when identifying that the home appliance is not currently operating, the virtual reality device 110 may identify whether the operation of the home appliance is scheduled (S2234). When the home appliance is not currently operating, the virtual reality device 110 may identify whether a scheduled operation is set for the home appliance by analyzing the information on the occurrence of the event. For example, the information includes preset scheduled information for the home appliance.

. When the operation of the home appliance is scheduled, the virtual reality device 110 may operate in the same manner as the non-fire-control device.

. According to one embodiment, when the operation of the home appliance is not scheduled, the virtual reality device 110 may identify whether the home appliance is a home appliance that operates only when a door is closed (S2236). The virtual reality device 110 may analyze the information on the occurrence of the event (e.g., an identifier of the home appliance) to determine whether the home appliance is a home appliance that does not require fire-control but requires attention to surroundings (e.g., door opening) (e.g., a washing machine, a dryer, a styler), or a home appliance that does not require attention (or requires relatively less attention) (e.g., a humidifier, a dehumidifier).

. According to one embodiment, when identifying that the home appliance is a home appliance that operates only when a door is closed, the virtual reality device 110 may operate the home appliance in the same manner as operation of the fire-control device (S2238). When it is identified whether the home appliance is a home appliance that operates only when a door is closed or a home appliance requiring closing of a door, the virtual reality device 110 may operate the home appliance using the method shown in FIG. 24.

. For example, when identifying that the home appliance is a home appliance that does not require fire-control but requires attention to surroundings (e.g., door opening) (e.g., a washing machine, a dryer, a styler), the virtual reality device 110 may operate the home appliance using the method shown in FIG. 9.

. According to one embodiment, when identifying that the home appliance is not a home appliance that operates only when a door is closed, the virtual reality device 110 may operate the home appliance in the same manner as the non-fire-control device (S2240). When identifying that the home appliance is a home appliance that does not require attention (or requires relatively less attention) (e.g., a humidifier, a dehumidifier), the virtual reality device 110 may operate the home appliance by controlling an operation of the home appliance using the virtual reality device 110.

. As described above, the virtual reality device 110 according to the present disclosure may display a screen for controlling an operation of a home appliance based on acquisition of information on an event occurring in the home appliance, and may control the operation of the home appliance based on a command input on the displayed screen, and thus, the user 130 wearing the virtual reality device 110 can conveniently control the home appliance without removing the virtual reality device 110.

. Each operation of the flowcharts described above may be performed regardless of the shown order, or may be performed simultaneously. In addition, at least one component of the present disclosure and at least one operation performed by the at least one component may be implemented in hardware and/or software.

. Although the present disclosure has been described above with reference to exemplary drawings, the present disclosure is not limited by the embodiments and drawings disclosed in the specification, and it is apparent that various modifications can be made by those skilled in the art within the scope of the technical spirit of the present disclosure. In addition, even when the operational effects according to the configuration of the present disclosure have not been explicitly described in the description of the embodiments of the present disclosure, it is apparent that the effects predictable by the corresponding configuration should be recognized.

## Claims

1. A virtual reality device for installing an application for at least one home appliance, comprising:
a communication unit;
a display unit; and
a processor electrically connected to the communication unit and the display unit,
wherein the processor is configured to:
request, from a portable terminal, a list of the at least one home appliance registered in an application of the a portable terminal through the communication unit;
display the list received from the portable terminal through the display unit;
request and acquire application information for a home appliance selected from the displayed list; and
install the acquired application information into the application for the virtual reality device.

2. The virtual reality device of claim 1, wherein the processor is configured to classify functions of the acquired application by category based on the acquired application information, and to assign an identifier to each of the classified functions and store the assigned identifier.

3. The virtual reality device of claim 1, wherein the processor is configured to:
display an application for the at least one home appliance through the display unit;
acquire a stored identifier related to functions of a home appliance corresponding to an application selected from among the displayed applications for the at least one home appliance; and
generate a tree structure of the functions of the home appliance based on the acquired identifier.

4. The virtual reality device of claim 3, wherein the processor is configured to configure a screen to display the application for the at least one home appliance through the virtual reality device based on the tree structure of the functions of the home appliance, and
display the configured screen through the display unit.

5. The virtual reality device of claim 3, wherein the processor is configured to identify that the application for the home appliance is selected through a controller for controlling an operation of the virtual reality device, eye tracking, or a hand gesture of a user wearing the virtual reality device.

6. The virtual reality device of claim 1, wherein the processor is configured to:
identify whether a home appliance corresponding to an application installed in the application for the virtual reality device is present in the list of the at least one home appliance received from the portable terminal;
when the home appliance installed in the application for the virtual reality device is present in the list, display information indicating that the home appliance is installed in the application for the virtual reality device; and
when the home appliance is not present home appliance installed in the application for the virtual reality device in the list, display information indicating that the home appliance is not installed in the application for the virtual reality device.

7. The virtual reality device of claim 1, wherein the processor is configured to:
display, on the display unit, an app store for downloading the application for the selected home appliance, when a home appliance for which an application is to be installed is selected from the displayed list; and
acquire the application information for the selected home appliance from a server based on information of the home appliance based on the acquired application information.

8. The virtual reality device of claim 1, further comprising a camera,
wherein the processor is configured to:
acquire at least one image of the home appliance through the camera;
identify the home appliance through the acquired image;
request and acquire application information for the identified home appliance from a server; and
install the acquired application information into the application for the virtual reality device.

9. The virtual reality device of claim 8, wherein the processor is configured to analyze the acquired image to identify at least one of a product name, a model name, a quick response (QR) code, and a barcode of the home appliance.

10. The virtual reality device of claim 8, wherein the processor is configured to classify functions of the acquired application by category based on the acquired application information, and to assign an identifier to each of the classified functions and store the assigned identifier.

11. The virtual reality device of claim 8, wherein the processor is configured to:
when the home appliance is not identified through the acquired image, request and acquire an identifier of the home appliance from the home appliance; and
request and acquire application information for the home appliance corresponding to the acquired identifier from the server.

12. The virtual reality device of claim 8, which is configured to:
acquire a stored identifier related to functions of a home appliance corresponding to an application selected from among the applications for the at least one home appliance displayed through the display unit; and
generate a tree structure of the functions of the home appliance based on the acquired identifier.

13. The virtual reality device of claim 12, wherein the processor is configured to display the application for the at least one home appliance through the display unit by configuring a screen to be displayed through the virtual reality device based on the tree structure of the functions of the home appliance.

14. The virtual reality device of claim 12, wherein the processor is configured to identify that the application of the home appliance is selected through a controller for controlling operation of the virtual reality device, eye tracking, or a hand gesture of a user wearing the virtual reality device.

15. A method performed in a virtual reality device for installing an application for at least one home appliance, the method comprising:
requesting, from a portable terminal, a list of the at least one home appliance registered in an application of the portable terminal;
displaying the list received from the portable terminal;
requesting and acquiring application information for a home appliance selected from the displayed list; and
installing an application based on the acquired application information into the application for the virtual reality device.

16. A virtual reality device for controlling an operation of at least one home appliance, comprising:
a communication unit;
a display unit; and
a processor electrically connected to the communication unit and the display unit,
wherein the processor is configured to:
acquire information on an event occurring in the at least one home appliance through the communication unit;
based on the acquisition of the information on the event, switch a screen controlling the operation of the home appliance to a virtual reality mode and display the switched screen through the display unit;
generate control logic for controlling the operation of the home appliance based on a command input via the displayed screen; and
transmit the generated control logic to the home appliance to control the operation of the home appliance.

17. The virtual reality device of claim 16, wherein the processor is configured to:
acquire state information on the operation of the home appliance through the communication unit; and
switch the acquired state information to the virtual reality mode and display the switched state information through the display unit.

18. The virtual reality device of claim 16, wherein the processor is configured to pause an operating screen being displayed and to display the information on the event through the display unit when the information on the event is acquired while the operating screen of the virtual reality device is being displayed.

19. The virtual reality device of claim 17, wherein the processor is configured to:
perform pairing with the home appliance; and
acquire the information on the event through the communication unit while the pairing is maintained.

20. A method performed in a virtual reality device for controlling an operation of at least one home appliance, the method comprising:
acquiring information on an event occurring in the at least one home appliance;
based on the acquisition of the information on the event, switching a screen for controlling the operation of the home appliance to a virtual reality mode and displaying the switched screen;
generating control logic for controlling the operation of the home appliance based on a command input via the displayed screen; and
transmitting the generated control logic to the home appliance to control the operation of the home appliance.
